(19) Europäisches Patentamt
European Patent Office
Office européen des brevets

(11) EP 2 480 585 B1

(12) # EUROPÄISCHE PATENTSCHRIFT

(45) Veröffentlichungstag und Bekanntmachung des Hinweises auf die Patenterteilung:
**24.07.2019 Patentblatt 2019/30**

(21) Anmeldenummer: **10757034.3**

(22) Anmeldetag: **13.09.2010**

(51) Int Cl.:
***C08L 63/10*** *(2006.01)* ***C08G 59/14*** *(2006.01)*
***C08G 59/18*** *(2006.01)* ***C08L 71/02*** *(2006.01)*
***C09D 163/10*** *(2006.01)* ***C09D 5/02*** *(2006.01)*
***C08G 59/17*** *(2006.01)*

(86) Internationale Anmeldenummer:
**PCT/EP2010/005601**

(87) Internationale Veröffentlichungsnummer:
**WO 2011/032673 (24.03.2011 Gazette 2011/12)**

(54) **Wässrige strahlungshärtbare Epoxyacrylat-Dispersionen**

Water based radiation curable Epoxy acrylate dispersions

Dispersions aqueuses d'epoxy-acrylate réticulable par radiation

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **21.09.2009 EP 09290721**

(43) Veröffentlichungstag der Anmeldung:
**01.08.2012 Patentblatt 2012/31**

(73) Patentinhaber: **IGM Group B.V.**
**5145 RM Waalwijk (NL)**

(72) Erfinder:
- **BARO, Juergen**
**73732 Esslingen (DE)**
- **DRUENE, Laurence**
**77930 Perthes en Gatinais (FR)**
- **BIRNBRICH, Paul**
**42719 Solingen (DE)**
- **THOMAS, Hans-Josef**
**41352 Korschenbroich (DE)**

(74) Vertreter: **Nederlandsch Octrooibureau**
**P.O. Box 29720**
**2502 LS The Hague (NL)**

(56) Entgegenhaltungen:
**EP-A2- 0 272 595** **WO-A1-2004/037935**
**WO-A1-2006/056331** **DE-A1- 4 343 885**

- **DATABASE WPI Week 197617 Thomson Scientific, London, GB; AN 1976-30783X XP002579051 & JP 51 028198 A (MITSUBISHI RAYON CO LTD) 9. März 1976 (1976-03-09) -& JP 51 028198 A (MITSUBISHI RAYON CO) 9. März 1976 (1976-03-09)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 480 585 B1

**Beschreibung**

## Gebiet der Erfindung

Die Erfindung betrifft strahlungshärtbare, lagerstabile Epoxyacrylat-Dispersionen enthaltend spezielle Epoxyacrylatharze und spezielle Dispergatoren.

## Stand der Technik

Seit Ende der 1990-er Jahre haben strahlungshärtbare wässrige Dispersionen besondere Aufmerksamkeit erfahren, insbesondere weil Wasser als Lösungsmittel aus Umweltgründen besonders attraktiv ist. Gleichwohl besteht in diesem Marktsegment ein ständiger Bedarf nach Dispersionen mit verbesserten Eigenschaften. Die bisherige Technologie auf dem hier in Rede stehenden Gebiet ist gekennzeichnet durch Polyurethanacrylate. Demgegenüber sind Epoxyacrylate bislang kaum in Erscheinung getreten. Dies insbesondere deshalb, weil Epoxyacrylate - bisher praktisch ausschließlich Umsetzungsprodukte von Bisphenol-A-diglycidylether und Derivaten davon mit Acrylsäure - nur unter besonderen Schwierigkeiten in Wasser dispergiert werden konnten.

K.-D. Suh et al. beschreiben in Polymer Bulletin 36, 141-148 (1996) die Herstellung von Epoxyacrylaten, die sie durch Umsetzung des Epoxidharzes Bisphenol-A-diglycidylether mit Acrylsäure erhielten. Die Autoren berichten, dass die Herstellung stabiler wässriger Epoxyacrylat-Dispersionen dieses Typs durch bloße physikalische Emulgierprozesse schwierig ist. Um wässrige Dipersionen der Epoxyacrylate herzustellen, setzten sie Mischungen nichtionischer Tenside und Co-Tenside ein. Zum Einsatz kamen hierbei Sorbitanmonolaurat, Sorbitanmonopalmitat, Sorbitanmonooleat als Tenside und Cetylalkohol bzw. Stearylalkohol als Co-Tenside. Der Einsatz größerer Mengen derartiger Tensidmischungen zur Dispergierung des Epoxyacrylats ist jedoch für technische Anwendungszwecke wenig attraktiv, weil größere Mengen dieser Tenside negative Auswirkungen auf die Materialeigenschaften von Beschichtungen haben, die auf Basis derartiger Epoxyacrylat-Dispersionen zugänglich sind.

WO 2006/056331 offenbart strahlungshärtbare wäßrige BeschichtungsZusammensetzungen mit einem Gehalt an Epoxyacrylaten, wobei diese Zusammensetzungen dadurch erhältlich sind, dass man bei 20°C in wässrigen Systemen selbstdispergierende Epoxidharze mit Acryl- und/oder Methacrylsäure umsetzt, und die dabei erhaltenen Epoxyacrylate anschließend in einem wässrigen System dispergiert. Die Lagerstabilität der gemäß WO 2006/056331 erhältlichen Epoxyacrylat-Dispersionen beträgt nur wenige Tage und ist mithin unter praktischen Gesichtspunkten unbefriedigend.

## Beschreibung der Erfindung

Aufgabe der vorliegenden Erfindung war es, wässrige Epoxyacrylat-Dispersionen mit guter praxisgerechter Lagerstabilität bereitzustellen. Hierunter wird verstanden, dass die Dispersionen mindestens drei Monate lagerstabil bei Raumtemperatur (25 °C) sind, also in diesem Zeitraum keine Anzeichen von Absetzen oder Phasentrennung aufweisen. Vorzugsweise sollte die Lagerstabilität mindestens sechs Monate bei Raumtemperatur (25 °C) betragen. Die zu entwickelnden Epoxyacrylat-Dispersionen sollten ausserdem nach physikalischer Trocknung bereits vor der Strahlenhärtung klebfreie Beschichtungen liefern und so eine problemlose Verarbeitung auf Beschichtungsanlagen durch ausreichend hohe Härten gewährleisten. Die Härten können dabei nach verschiedenen, dem Fachmann einschlägig bekannten Methoden gemessen werden, beispielsweise an Hand der Pendelhärte.

Die im Rahmen der vorliegenden Erfindung zum Einsatz kommenden Epoxyacrylatharze sind hydrophober Natur, was sich darin äußert, dass sie bei 25° C in Wasser nicht selbstdispergierend sind.

Es sei angemerkt, dass im Rahmen der vorliegenden Erfindung der Begriff "Dispersion" verwendet wird. Dieser Begriff umfasst im Rahmen der vorliegenden Erfindung auch den Begriff der Emulsion. Damit ist ausgedrückt, dass es im Rahmen der vorliegenden Erfindung nicht um eine akademische Unterscheidung der Begriffe Dispersion und Emulsion geht. Es geht bei der vorliegenden Erfindung vielmehr darum, Substanzen in wässrigem Milieu "unterzubringen", wobei dies auf dem Wege einer Dispersion oder einer Emulsion geschehen kann. Dementsprechend wird durchgehend von Dispersion, dispergieren, Dispergator usw gesprochen, um eine einheitliche Terminologie zu verwenden, es ist jedoch stets gemeint Dispersion und/oder Emulsion, dispergieren und/oder emulgieren, Dispergator und/oder Emulgator, usw. Ersichtlich dient die Verwendung dieser Terminologie der besseren Lesbarkeit. Die Begriffe O/W-Dispersion (Öl-in-Wasser-Dispersion) bzw. W/O-Dispersion (Wasser-in- Öl-Dispersion) umfassen logischerweise auch O/W-Emulsionen (Öl-in-Wasser-Emulsionen) bzw. W/O-Emulsionen (Wasser-in- Öl-Emulsionen).

Es sei ferner klargestellt, dass der Begriff "Acrylsäure" im Sinne der vorliegenden Erfindung sowohl Acrylsäure, als auch Methacrylsäure oder Mischungen von Acryl- und Methacrylsäure umfasst. Auch hier dient die verwendete Terminologie der sprachlichen Vereinfachung.

Unter HLB-Wert wird im Rahmen der vorliegenden Erfindung die klassische Definition nach Griffin verstanden. Für diese gilt die Formel:

$$HLB = 20 * (1 - M1 / M)$$

wobei M1 die Molmasse des hydrophoben Teils des Moleküls ist und M die Molmasse des gesamten Moleküls.

Der im Rahmen der vorliegenden Erfindung verwendete Begriff der Oxirangruppe entspricht genau dem, was in der organischen Chemie vom Fachmann darunter verstanden wird: Eine Oxirangruppe ist eine Oxacyclopropangruppe. Oxirangruppen werden in der Literatur auch als "Epoxidgruppen" bezeichnet, weil Epoxide Verbindungen sind, die Oxirangruppen enthalten. Die Verbindungen (A) enthalten Oxirangruppen. Die Verbindungen (B) enthalten keine Oxirangruppen. Die Verbindungen (C) enthalten ebenfalls keine Oxirangruppen.

Funktionelle Gruppen können bei organischen Molekülen "terminal" oder "innenständig" positioniert sein. "Terminal" bedeutet, dass eine Gruppe am Ende einer Kohlenstoffkette sitzt, also endständig ist. "Innenständig" bedeutet, dass eine Gruppe an einer Stelle im Molekül sitzt, die nicht-terminal ist. Diese dem Fachmann wohlvertraute Nomenklatur zur Bezeichnung der Position funktioneller Gruppen wird auch im Rahmen der vorliegenden Erfindung verwendet.

Überraschenderweise wurde gefunden, dass ein aufeinander abgestimmtes System von acryliertem Dispergator und Epoxyacrylatharz, wobei die Phaseninversionstemperatur des wässrigen Systems oberhalb von 50 °C liegt, die oben genannten Anforderungen in Bezug auf die Lagerstabilität der resultierenden Dispersion und die Klebfreiheit von physikalisch getrockneten, aber noch nicht strahlengehärteten Beschichtungen in jeder Hinsicht ausgezeichnet zu erfüllen vermag.

Die erfindungsgemäßen Dispersionen zeichnen sich ferner durch gute Handhabbarkeit und Applizierbarkeit (= Einarbeitbarkeit in anwendungstechnisch brauchbare Systeme) aus und eignen sich zur Beschichtung unterschiedlichster Substrate, insbesondere Holz, Kunststoffe, Metalle, Papier, Karton, Glas, Keramik, Leder und Textilien durch Spritzen, Gießen, Walzen, Rakeln, Streichen und Tauchen.

Gegenstand der Erfindung sind zunächst wässrige strahlenhärtbare, Epoxyacrylat-Dispersionen enthaltend

(a) ein Epoxyacrylatharz (P*) mit mindestens 2 Acrylatgruppen pro Molekül, wobei dieses Epoxyacrylatharz bei 25 °C in Wasser nicht selbst-dispergierend ist, und
(b) einen Dispergator (D*) mit mindestens 1 Acrylatgruppe pro Molekül,

wobei diese Dispersionen erhältlich sind, indem man
<u>zunächst in einer ersten Stufe (i)</u>

- ein oder mehrere Verbindungen (A), die ausgewählt sind aus der Gruppe der nichtionischen Verbindungen, die einen HLB-Wert von weniger als 12 haben und pro Molekül mindestens zwei Oxirangruppen enthalten, mit
- ein oder mehrere Verbindungen (B), die ausgewählt sind aus der Gruppe der nichtionischen Verbindungen, die einen HLB-Wert im Bereich von 12 bis 20 aufweisen und pro Molekül mindestens eine H-acide Gruppen (ZH) enthalten

- gegebenenfalls in Gegenwart eines Katalysators - umsetzt, wobei man die Verbindungen (A) und (B) in einem Äquivalentverhältnis EpO(A) : ZH (B) im Bereich von 1,3 : 1 bis 400 :1 einsetzt,

<u>die erhaltene Reaktionsmischung, in einer zweiten Stufe (ii)</u>

- mit ein oder mehreren nichtionischen Verbindungen, die einen HLB-Wert von weniger als 12 haben und pro Molekül mindestens zwei Oxirangruppen enthalten (Verbindungen A) und
- mit ein oder mehreren Verbindungen (C), die ausgewählt sind aus der Gruppe der nichtionischen Verbindungen, die einen HLB-Wert von weniger als 12 haben und die pro Molekül mindestens zwei H-acide Gruppen enthalten,

- gegebenenfalls in Gegenwart eines Katalysators - umsetzt, wobei man die Verbindungen (A) und (C) in einem Äquivalentverhältnis EpO(A) : ZH (C) im Bereich von 1,1 :1 bis 20 : 1 einsetzt,

<u>die erhaltene Reaktionsmischung in einer dritten Stufe (iii)</u>

- gegebenenfalls in Gegenwart eines Katalysators -mit Acrylsäure unter Ringöffnung aller Epoxygruppen umsetzt,

<u>die erhaltene Reaktionsmischung in einer vierten Stufe (iv)</u>
in Wasser dispergiert.

Ausdrücklich sei festgestellt, dass die oben mehrfach gebrauchte Formulierung "die erhaltene Reaktionsmischung" sich jeweils auf die Mischung bezieht, die am Ende der Reaktion, die in der jeweiligen Verfahrensstufe stattfindet, vorliegt. Der Ausdruck "die erhaltene Reaktionsmischung" wird in der vorliegenden Erfindung stets in diesem Sinne gebraucht.

In einer Ausführungsform beträgt die Menge an Dispergator (D*) - bezogen auf die Menge an Epoxyacrylatharz (P*) maximal 10 Gew.-%.

Die erfindungsgemäßen Dispersionen haben folgende Vorteile:

- Die daraus durch Strahlenhärtung hergestellten Beschichtungen weisen eine ausserordentlich gute thermische und chemische Beständigkeit auf.
- Die daraus durch Strahlenhärtung hergestellten Beschichtungen weisen einen hervorragenden Glanz auf.
- Die daraus durch Strahlenhärtung hergestellten Beschichtungen weisen eine ganz ausgezeichnete Härte auf, die besser ist als diejenige von Urethanacrylat-basierten Systemen. Bereits vor der Strahlungshärtung zeigen die Beschichtungen durch rein physikalische Trocknung eine recht gute Härte, d.h. sie führen bereits vor Strahlenhärtung zu klebfreien Beschichtungen.
- Die daraus durch Strahlenhärtung hergestellten Beschichtungen weisen eine hohe Vernetzungsdichte auf. Mit anderen Worten entsteht bei der Aushärtung ein integrales Netzwerk.
- Sie können einen sehr hohen Feststoffgehalt aufweisen. Werte im Bereich von 10 bis 70 Gew.-% und insbesondere 25 bis 60 Gew.-% - Feststoffgehalt der wäßrigen Dispersionen bezogen auf die gesamte Dispersion - sind dabei bevorzugt. Der hohe Feststoffgehalt hat den Vorteil, dass bei der Aushärtung weniger Wasser verdunstet werden muss, was sowohl die Aushärtegeschwindigkeit verbessert als auch den Energieverbrauch für die Verdunstung des Wassers vermindert.
- Im Gegensatz zu Polyurethanacrylaten, die im allgemeinen mit Aminen schwach basisch bei pH-Werten im Bereich von 7-8 eingestellt und dadurch ionisch dispergiert werden, und die dadurch sehr empfindlich gegenüber pH-Schwankungen sind, was sich in einer Instabilität der Dispersionen genauso zeigt wie durch unerwünschte Geruchsbildung durch freigesetztes Amin, sind die erfindungsgemäßen nichtionischen Epoxyacrylat-Dispersionen relativ unempfindlich gegenüber pH-Schwankungen.
- Die Mindestfilmbildungstemperatur liegt unterhalb von 20 °C, so dass homogene Verfilmung bei moderaten Temperaturen möglich ist ohne dass eigens ein Koaleszenzmittel zugesetzt werden muss.
- Die kolloidale Stabilität ist sehr groß. Dies drückt sich nicht nur in der bereits erwähnten guten Lagerstabilität unter Standardbedingungen aus (mindestens drei Monate und vorzugsweise mindestens 6 Monate bei 25 °C), sondern wird auch daran deutlich, dass selbst besonders verschärfte Lagerungsbedingungen die Dispersionen nicht negativ beeinflussen: So haben Untersuchungen der Anmelderin gezeigt, dass eine 30tägige Lagerung bei 60 °C oder ein mehrfaches cyclisches Wechseln der Temperatur im Bereich von 4 °C bis 60 °C die Dispersionen praktisch unverändert lässt (Indikator hierfür ist, dass die D50-Werte der Partikelgröße und die Viskosität unter diesen Testbedingungen sich nicht signifikant veränderten).

Zum besseren Verständnis der vorliegenden Erfindung sei im übrigen noch folgendes ausgeführt:
Es geht darum, wässrige Dispersionen von Epoxyacrylaten herzustellen, wobei diese Dispersionen die in der Aufgabenstellung erwähnten positiven Eigenschaften aufweisen. Die erfindungsgemäßen wässrigen Epoxyacrylat-Dispersionen enthalten somit - global betrachtet - Wasser, Epoxyacrylat (P*) und Dispergator (D*). Die Abkürzung (P*) für Epoxyacrylat wird gewählt, weil Epoxyacrylate Polymere sind. Im Zuge der Herstellung der erfindungsgemäßen wässrigen Epoxyacrylat-Dispersionen sind drei Synthese-Bausteine wichtig: Die Verbindungen (A) sind einerseits Bausteine für den Dispergator (D*) und andererseits für das Polymer (P*). Die Verbindungen (B), die ein hydrophiles Strukturelement enthalten, sind Bausteine für den Dispergator (D*). Die Verbindungen (C) sind Bausteine für das Polymer (P*).

Aus der Reaktion von A und B entsteht eine Vorstufe des Dispergators (D*), was schematisch durch die Reaktionsgleichung $A + B \rightarrow D$ ausgedrückt werden kann. Es ist im Rahmen der vorliegenden Erfindung von zentraler Bedeutung, dass diese Reaktion in einer separaten Reaktionsstufe stattfindet. Sie findet in Stufe (i) statt. Da A in Stufe (i) im Überschuss eingesetzt wird, enthält die erhaltene Reaktionsmischung ex (i) eine Mischung von A und D. Unter (D*) wird der in der fertigen Dispersion vorliegende Dispergator verstanden, der durch Acrylat-Funktionalität gekennzeichnet ist; demgegenüber wird unter (D) eine entsprechende nichtacrylierte Form verstanden, die am Ende der Stufe

(i) vorliegt.

Aus der Reaktion von A und C entsteht eine Vorstufe des zu dispergierenden Polymers, was schematisch durch die Reaktionsgleichung A + C → P ausgedrückt werden kann. Diese Reaktion findet in Stufe (ii) statt. Da in Stufe (ii) die in Stufe (i) erhaltene Mischung (also A + D) eingesetzt wird, könnte man für die Stufe (ii) auch weiter präzisierend schreiben A + C + D → P + D + D'. Hierbei erscheint D auf beiden Seiten der Reaktionsgleichung, womit ausgedrückt wird, dass D, das ja in Stufe (i) hergestellt wurde, in Stufe (ii) in hohem Maße unverändert bleibt, in gewissem Maße jedoch oligomerisiert wird, wobei D' entsteht. Da A in Stufe (ii) im Überschuss eingesetzt wird, enthält die erhaltene Reaktionsmischung ex (ii) eine Mischung von A, P, D und D'.

Unter (P*) wird das in der fertigen Dispersion vorliegende Polymer verstanden, das durch Acrylat-Funktionalität gekennzeichnet ist; demgegenüber wird unter (P) die entsprechende nichtacrylierte Form verstanden und es gilt, dass (P*) in Stufe (iii) durch Acrylierung von (P) entsteht. Analog gilt, dass (D*) in Stufe (iii) durch Acrylierung von (D) und (D') entsteht.

In einer Ausführungsform wird Stufe (iv) in zwei Teilschritten durchgeführt, nämlich wie folgt: Die in Stufe (iii) erhaltene Reaktionsmischung wird

- in einer Stufe (iv-a) in Wasser unter Entstehung einer W/O-Dispersion dispergiert, und

- die erhaltene W/O-Dispersion in einer Stufe (iv-b) - gewünschtenfalls unter Zugabe von weiterem Wasser - bis zum Erreichen der Phaseninversionstemperatur weiter abkühlt, wobei eine O/W-Dispersion entsteht. Vorzugsweise liegt hierbei die Phaseninversionstemperatur oberhalb von 50 °C.

Die Stufen (i) und (ii) werden vorzugsweise unter Inertgasatmorphäre, insbesondere Stickstoff, durchgeführt.

Das am Ende von Stufe (i) erhaltene Intermediat, also die am Ende von Stufe (i) erhaltene Reaktionsmischung, kann - vorzugsweise unter Schutzgas wie beispielsweise Stickstoff - zwischenzeitlich abgefüllt und vor der weiteren Verarbeitung in Stufe (ii) gelagert werden; das Intermediat kann aber auch sofort weiterverarbeitet, d.h. unmittelbar der Stufe (ii) zugeführt, werden. Die Stufen (ii) bis (iv) werden vorzugsweise im selben Reaktor durchgeführt, der aber nicht mit dem Reaktor der Stufe (i) identisch sein muss.

Stufe (i) wird vorzugsweise bei Temperaturen im Bereich von 90 bis 150 °C und insbesondere 120 bis 150 °C durchgeführt, vorzugsweise in Gegenwart eines Katalysators. Die Umsetzung der Stufe (i) ist dann beendet, wenn die H-aciden Gruppen der Verbindungen (B) verbraucht sind, also unter Ringöffnung der im System vorhandenen Oxirangruppen reagiert haben. Dies ist in einfacher Weise daran zu erkennen, dass der Epoxidgehalt der Mischung nicht mehr weiter abnimmt. Der Verlauf der Reaktion kann also auf einfache Weise an Hand des Epoxidgehalts kontrolliert werden. Sobald der gewünschte Epoxidgehalt erreicht ist, wird die Reaktionsmischung abgekühlt, sinnvollerweise auf eine Temperatur, bei der die Mischung noch flüssig ist. In dieser flüssigen Form kann die Mischung längere Zeit, worunter ein Zeitraum von bis zu etwa 12 Monaten zu verstehen ist, gelagert werden, bevor sie in Stufe (ii) weiterverarbeitet wird. Dabei kann es nützlich sein, die aus (i) erhaltene Reaktionsmischung durch Zugabe einer weiteren Menge an Verbindung (A) zu verdünnen und auf diese Weise weiter abzukühlen, weil ein reines Abkühlen ohne Verdünnung dazu führen würde, dass die Mischung fest würde. Dadurch wird sichergestellt, dass die derart verdünnte Mischung bei Lagerung einerseits flüssig und andererseits chemisch stabil bleibt, also weitere unerwünschte Reaktionen innerhalb der Mischung unterbleiben. Ausdrücklich sei angemerkt, dass die Menge an (A), die in die fertige Reaktionsmischung der Stufe (i) zu Verdünnungszwecken hinzugefügt wird, für das oben bezüglich Stufe (A) angegebene Äquivalentverhältnis nicht zu berücksichtigen ist, sehr wohl aber für das oben bezüglich Stufe (ii) angegebene Äquivalentverhältnis.

In Stufe (i) setzt man wie bereits angegeben die Verbindungen (A) und (B) in einem Äquivalentverhältnis EpO(A) : ZH (B) im Bereich von 1,3 : 1 bis 400 :1 ein. Der Ausdruck "EpO(A)" bezeichnet dabei die Oxirangruppen der Verbindungen (A). Der Ausdruck "ZH(B)" bezeichnet entsprechend die H-aciden Gruppen der Verbindungen (B). In einer Ausführungsform setzt man in Stufe (i) die Verbindungen (A) und (B) in einem Äquivalentverhältnis EpO(A) : ZH (B) im Bereich von 1,5 : 1 bis 50 :1 ein. Ganz besonders bevorzugt ist es dabei, die Verbindungen (A) und (B) in einem Äquivalentverhältnis EpO(A) : ZH (B) im Bereich von 10 : 1 bis 40: 1 und insbesondere 15 : 1 bis 30 : 1 einzusetzen, wobei ein Verhältnis von etwa 20 : 1 ganz besonders bevorzugt ist.

Obwohl der Begriff des Äquivalents dem Fachmann auf dem hier in Rede stehenden Gebiet der Polymerchemie geläufig ist, sei nachstehend der Klarheit halber dargestellt, was darunter zu verstehen ist. Der Ausdruck Äquivalente ist im üblichen Sinne zu verstehen und fokussiert auf die zur Verfügung stehenden reaktiven Gruppen von Molekülen. So enthält beispielsweise 1 mol eines Monoalkohols 1 mol an OH-Gruppen; 1 mol eines Diols enthält 2 mol an OH-Gruppen, 1 Mol eines Triols enthält drei mol an OH-Gruppen, usw. Ganz analog enthält 1 mol eines Diglycidylethers (EpO-Funktionalität = 2) 2 mol an Glycidylgruppen und damit Oxirangruppen.

Will man beispielsweise einen Diglycidylether (A) und eine Verbindung (B) miteinander derart umsetzen, dass die eingesetzten Verbindungen bezogen auf die Oxiranringe bzw. OH-Gruppen in einem bestimmten Verhältnis stehen sollen, so empfiehlt es sich, anstelle von Gewichts- oder Molverhältnissen auf die Verhältnisse der reaktiven Gruppen abzustellen. Dieses EpO(A) : ZH (B)-Verhältnis bezeichnet man als das Äquivalentverhältnis. Allgemein ausgedrückt ist das Äquivalentverhältnis das Zahlenverhältnis definierter reaktiver Gruppen in den eingesetzten Reaktanden.
Der Anschaulichkeit halber sei zusätzlich durch ein praktisches Beispiel erläutert, wie man ein Äquivalentverhältnis auf einfache Weise ermittelt. Setzt man beispielsweise im Sinne der erfindungsgemäßen Lehre

- 3 mol Bisphenol-A-diglycidylether (EpO-Funktionalität = 2) mit 2 Oxirangruppen pro Molekül und
- 1 mol eines Polyethylenglykols (OH-Funktionalität = 2) mit zwei OH-Gruppen pro Molekül

miteinander um, dann enthält

- der eingesetzte Bisphenol-A-diglycidylether 6 mol Oxiran-Gruppen und
- das eingesetzte PEG 2 mol OH-Gruppen,

Das Zahlenverhältnis der Oxiran-Gruppen des Bisphenol-A-diglycidylethers zu den OH-Gruppen des Polyethylenglykols beträgt mithin 6 : 2 oder 3 : 1.

In Stufe (ii) setzt man die Verbindungen (A) und (C) in einem Äquivalentverhältnis EpO(A) : ZH (C) im Bereich von 1,1 : 1 bis 20: 1, vorzugsweise 1,1 : 1 bis 10 : 1 und insbesondere 1,5 : 1 bis 5 :1 ein. Ganz besonders bevorzugt ist es dabei, die Verbindungen (A) und (C) in einem Äquivalentverhältnis EpO(A) : ZH (C) im Bereich von 1,5 : 1 bis 3: 1 und insbesondere 1,8 : 1 bis 2,2 : 1 einzusetzen, wobei ein Verhältnis von etwa 2 : 1 ganz besonders bevorzugt ist. Es sei ausdrücklich angemerkt, dass bei diesen Angaben zum Äquivalentverhältnis in Stufe (ii) bezüglich der Verbindungen (A) die Gesamtmenge der Verbindungen (A) gemeint ist, die in der Stufe (ii) zum Einsatz kommt; zu dieser Gesamtmenge tragen die Verbindungen (A), die aus der am Ende der Reaktion von Stufe (i) erhaltenen Reaktionsmischung stammen genauso bei wie die Verbindungen (A), die bei Bedarf nach Abschluss der Reaktion (i) zu Verdünnungszwecken noch weiter zugegeben werden, und ebenso die Verbindungen (A), die in Stufe (ii) noch zusätzlich zudosiert werden. Mit anderen Worten, ergibt sich die Gesamtmenge der Verbindungen (A), die in Stufe (ii) zum Einsatz kommen und die für die genannten Äquivalentverhältnisse (A) : (C) zu berücksichtigen ist, aus dem Restgehalt an (A), der am Ende der Stufe (i) vorliegt plus der Menge an (A), die bei Bedarf nach Abschluss der Reaktion (i) zu Verdünnungszwecken noch weiter zugegeben wird plus der Menge an (A), die in Stufe (ii) noch weiter zugesetzt wird.

Stufe (ii) wird vorzugsweise bei Temperaturen im Bereich von 120 °C bis 190 °C und insbesondere 140 °C bis 170 °C durchgeführt, vorzugsweise in Gegenwart eines Katalysators.

Die Umsetzung der Stufe (ii) ist dann beendet, wenn die H-aciden Gruppen der Verbindungen (C) verbraucht sind, also unter Ringöffnung der im System vorhandenen Oxirangruppen reagiert haben. Dies ist in einfacher Weise daran zu erkennen, dass der Epoxidgehalt der Mischung nicht mehr weiter abnimmt.

In einer Ausführungsform wird Stufe (iii), also die Acrylierung, in einer Sauerstoff-haltigen Atmosphäre - insbesondere Luft - und in Gegenwart eines Inhibitors durchgeführt. Bezüglich der Acrylierung können im übrigen alle dem Fachmann einschlägig bekannten Techniken eingesetzt werden.
In den Stufe (iv) ist die Atmosphäre unkritisch. Sofern man die Acrylierung in einer Sauerstoff-haltigen Atmosphäre - insbesondere Luft - und in Gegenwart eines Inhibitors durchgeführt, bleibt man vorzugsweise bei der Stufe (iii) eingeführten Sauerstoff-haltigen Atmosphäre, insbesondere Luft. Die Acrylierung in Stufe (iii) wird mittels Acrylsäure und/oder Methacrylsäure durchgeführt. In einer besonders bevorzugten Ausführungsform wird ausschließlich Acrylsäure eingesetzt.

In Stufe (iv) kann gewünschtenfalls ein Viskositäts-reduzierendes Additiv zugegeben werden, weil die Phaseninversion in der Regel von einem deutlichen ViskositätsAnstieg begleitet ist.

Als Viskositäts-Minderer eignen sich dabei insbesondere organische Lösungsmittel mit niedrigem Molekulargewicht, insbesondere einem Molekulargewicht unter 350. Derartige Lösemittel bewirken über ihre viskositätsmindernde Funktion hinaus eine zusätzliche Hydrophilierung der organischen Phase und unterstützen die Dispergierung des Epoxyacrylat-Harzes (P). Beispiele für geeignete Lösungsmittel sind etwa Ethoxypropanol, Propoxypropanol oder Isopropanol. Gewünschtenfalls können diese leicht flüchtigen organischen Lösungsmittel aus der fertigen Dispersion wieder teilweise oder ganz entfernt werden, z.B. durch Abziehen im Vakuum.

Als Viskositäts-Minderer können an Stelle von organischen Lösungsmitteln gewünschtenfalls auch niedrigviskose mono- oder multifunktionelle Acrylate eingesetzt werden.

Die Menge an viskositätsmindernden Additiven, die gewünschtenfalls in Stufe (iv) zugesetzt werden, beträgt maximal 10 Gew.-% und vorzugsweise maximal 6,5 Gew.-% (jeweils bezogen auf die gesamte Dispersion).

Vorzugsweise wird die Herstellung der erfindungsgemäßen wässrigen Dispersion enthaltend (a) Epoxyacrylatharz (P*) und (b) Dispergator (D*) so durchgeführt, dass die Dispersion einen Feststoffgehalt im Bereich von 10 bis 70 Gew.-% und insbesondere 25 bis 60 Gew.-% - bezogen auf die gesamte Dispersion - hat.

Es sei nochmals betont, dass die mehrstufige Verfahrensführung sowie die zugehörigen Randbedingungen entscheidend für den Erfolg der vorliegenden Erfindung sind. Erst durch diese spezielle Merkmalskombination, die in

der zitierten WO 2006/056331 weder unmittelbar und eindeutig offenbart noch nahegelegt ist, wird die Lösung der oben genannten Aufgabenstellung erreicht.

Insbesondere gilt, dass die Epoxyacrylat-Dispersionen gemäß der WO 2006/056331 eine nur unzureichende Lagerstabilität aufweisen. So ist etwa die Dispersion gemäß Beispiel 2 der WO 2006/056331 A1 nur kurzfristig (weniger als 10 Tage) bei 25 °C lagerstabil und verfehlt dadurch bei weitem die Aufgabenstellung der vorliegenden Erfindung, wonach eine Lagerstabilität der Epoxyacrylat-Dispersionen von mindestens 3 Monaten bei 25 °C gegeben sein muss. Die Lagerstabilität korreliert nach Untersuchungen der Anmelderin im übrigen mit der für Stufe (iv) wichtigen Phaseninversionstemperatur. Diese kann somit als ein Indikator dafür gelten, dass die Zusammensetzung der Dispersionen gemäß der vorliegenden Erfindung und gemäß der WO 2006/056331 verschieden sind. So kann etwa dem Beispielteil entnommen werden, dass die erfindungsgemäße Dispersion (Beispiel 1) eine Phaseninversionstemperatur von 60 °C aufweist, während im Vergleichsbeispiel (Beispiel 2) die Phaseninversionstemperatur lediglich 30 °C beträgt. Dem korreliert eine exzeptionell gute Lagerstabilität der Dispersion des Beispiels 1 (mehr als 6 Monate) und eine sehr schlechte Lagerstabilität der Dispersion des Beispiels 2 (weniger als 10 Tage).

Dass die Epoxyacrylat-Zusammensetzung gemäß der vorliegenden Erfindung und derjenigen gemäß der Lehre der WO 2006/056331, wo ausweislich der Beispiele eine Eintopfreaktion durchgeführt wird, unterschiedliche sind, spiegelt sich außer dem schon angesprochenen Unterschied hinsichtlich der Phaseninversionstemperatur auch in den unterschiedlichsten Eigenschaften der Dispersionen klar wieder. Hierzu sei auf den Beispielteil der vorliegenden Anmeldung verwiesen, wo nachgewiesen wird, dass die Lehre der vorliegenden Erfindung im Vergleich zur Lehre der WO 2006/056331 zu folgenden Vorteilen führt:

- sprunghafter und extrem starker Anstieg der Lagerstabilität der Dispersion
- sprunghafter und extrem starker Anstieg der Härte von Beschichtungen auf Basis der Epoxyacrylat-Dispersionen nach physikalischer Trocknung und vor UV-Härtung.

<u>Zu den Verbindungen (A)</u>

Die Verbindungen (A), werden ausgewählt aus der Gruppe der nichtionischen Verbindungen, die einen HLB-Wert von weniger als 12 haben und pro Molekül mindestens zwei Oxirangruppen enthalten.

Die Oxirangruppen in den Verbindungen (A) können hinsichtlich ihrer Position terminal (endständig) oder innenständig angeordnet sein. Vorzugsweise sind die Oxirangruppen terminal.

In einer Ausführungsform wählt man solche Verbindungen (A), die durch Umsetzung entsprechender Verbindungen, die mindestens zwei C=C-Doppelbindungen enthalten, durch Epoxidierung erhältlich sind.

In einer Ausführungsform werden die Verbindungen (A) ausgewählt aus der Gruppe der Glycidylverbindungen mit einer Funktionalität von mindestens 2 . Es handelt sich um Verbindungen, die pro Molekül zwei oder mehrere Glycidylgruppen aufweisen, also Gruppen, die durch folgende Formel gekennzeichnet sind:

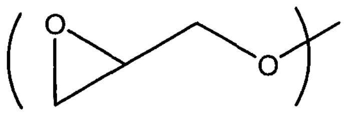

Die reaktive Gruppe innerhalb der Glycidylgruppe ist der Oxiranring (EpO). Zwei besonders attraktive Glycidylverbindungen sind im Rahmen der vorliegenden Erfindung:

- Glycidylether, die typischerweise durch Umsetzung von Polyolen mit Epichlorhydrin hergestellt werden.

- Glycidylester, die z.B. durch Umsetzung von Polycarbonsäuren mit Epichlorhydrin erhältlich sind.

Die Glycidylgruppen in den Verbindungen (A) können hinsichtlich ihrer Position terminal oder innenständig angeordnet sein. Vorzugsweise sind die Glycidylgruppen terminal.

Vorzugsweise setzt man Glycidylether als Glycidylverbindungen (A) ein, insbesondere aliphatische, cycloaliphatische oder aromatische Epoxidverbindungen oder Mischungen hiervon.

Beispiele für geeignete polyfunktionelle Glycidylether mit einer Funktionalität ≥ 2 sind: Bisphenol A Diglycidylether, vollständig hydrierter Bisphenol A Diglycidylether, Bisphenol F Diglycidylether, Bisphenol A/F Diglycidylether, Epoxy-Novolakharze, Cardanol® NC 514 (Cardanol-basierender Diglycidylether von Cardolite), Rizinusöltriglycidylether, Ethylenglykoldiglycidylether, 1,4-Butandioldiglycidylether, 1,6-Hexandioldiglycidylether, 1.4-Cyclohexandimethanoldiglycidylether, Neopentylglykoldiglycidylether, Trimethylolpropantriglycidylether, Trimethylolethantriglycidylether, propoxylierter Glycerintriglycidylether, Glycerintriglycidylether und Pentaerythrittetraglycidylether.

Beispiele für geeignete polyfunktionelle Glycidylester mit einer Funktionalität ≥ 2 sind: Dimerfettsäurediglycidylester, Hexahydrophthalsäurediglycidylester.

Beispiele für geeignete polyfunktionelle Epoxide mit einer Funktionalität ≥ 2 sind: epoxidiertes Sojaöl, epoxidiertes Leinöl, epoxidierter Leinölfettsäuremethylester, Limonendioxid, 3,4-Epoxycyclohexylmethyl-3,4-epoxycyclohexancarboxylat, Bis-(3,4-epoxycyclohexylmethyl)-adipat.

In einer Ausführungsform setzt man difunktionelle Glycidylether ein, also Verbindungen mit zwei Glycidylethergruppen pro Molekül.

In einer bevorzugten Ausführungsform wird Bisphenol-A-Diglycidylether als Verbindung (A) eingesetzt.

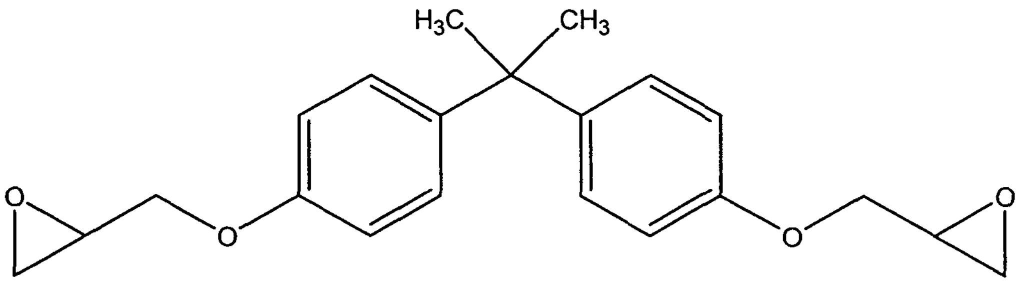

(Bisphenol-A-Diglycidylether)

Die Verbindungen (A) sind verschieden von den Verbindungen (B) und von den Verbindungen (C).

In einer Ausführungsform enthalten die Verbindungen (A) neben den obligatorischen Oxirangruppen zusätzlich auch ein oder mehrere Acrylatgruppen pro Molekül.

<u>Zu den Verbindungen (B)</u>

Die Verbindungen (B) werden ausgewählt aus der Gruppe der nichtionischen Verbindungen, die einen HLB-Wert im Bereich von 12 bis 20 aufweisen und pro Molekül mindestens eine H-acide Gruppe (ZH) enthalten. Vorzugsweise liegt der HLB-Wert der Verbindungen (B) im Bereich von 15 bis 20.

Die Verbindungen (B) sind frei von Oxirangruppen.

Unter einer H-aciden Gruppe wird im Rahmen der vorliegenden Erfindung - bei den Verbindungen (B) ebenso wie bei den Verbindungen (C) - eine Gruppe verstanden, die ein Zerewitinoff-aktives Wasserstoffatom enthält. Bekanntlich bezeichnet man an N, O oder S gebundenen Wasserstoff dann als Zerewitinoff-aktiven Wasserstoff (manchmal auch nur als "aktiven Wasserstoff"), wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl-, Amino-, Imino- oder Thiol-Gruppen als funktionelle Gruppen enthalten. Im Rahmen der vorliegenden Erfindung ist von zentraler Bedeutung, dass die H-aciden Gruppen (ZH) mit Oxiranringen (EpO) unter Ringöffnung reagieren können. Im Rahmen der vorliegenden Erfindung sind OH-Gruppen, SH-Gruppen, COOH-Gruppen sowie primäre oder sekundäre Amingruppen besonders bevorzugt als H-acide Gruppen der Verbindungen (B).

Im Gegensatz zu den Verbindungen (C), die hydrophober Natur sind, handelt es sich bei den Verbindungen (B) um hydrophile Substanzen.

Die H-aciden Gruppen in den Verbindungen (B) können hinsichtlich ihrer Position terminal oder innenständig angeordnet sein.

Die H-aciden Gruppen sind vorzugsweise terminal. Verbindung (B) mit zwei H-aciden Gruppen sind bevorzugt.

Es sei klargestellt, dass die Verbindungen (B) sich strukturell von den Verbindungen (C) unterscheiden. Der Unterschied liegt darin, dass die Verbindungen (C) frei sind von hydrophilen Strukturelementen, die die relativ hohen HLB-Werte der Verbindungen (B) bedingen. Für die Verbindungen (B) sind hydrophile Strukturelemente (z.B. Polyalkylenoxid-Bausteine oder Zucker-Bausteine, wobei Polyalkylenoxid-Bausteine bevorzugt sind) essentiell, denn diese sind der Faktor, der die Wasser-Kompatibilität bzw. -Löslichkeit der erfindungsgemäßen Dispergatoren ausmacht. Dementsprechend müssen die hydrophilen Strukturelemente in den Verbindungen (B) in einem Ausmaß enthalten sein, dass die daraus durch Umsetzung mit den Verbindungen (A) nebst späterer Acrylierung resultierenden Verbindungen Dispergatoren für die Epoxyacrylate sind.

In einer Ausführungsform liegt der Trübungspunkt (cloud point) der Verbindungen (B) oberhalb von 50 °C. Der Trübungspunkt einer nichtionischen Verbindung ist die Temperatur, wo eine wäßrige Lösung dieser Verbindung beginnt, sich in zwei Phasen zu trennen, in eine wäßrige und in eine mit der nichtionischen Verbindung und deshalb trüb wird.

Der Trübungspunkt wir im Rahmen der vorliegenden Erfindung nach der Methode gemäß DIN EN 1890 bestimmt.

Beispiele für geeignete nichtionische Verbindungen (B) mit H-aciden Gruppen und einem HLB-Wert oberhalb von 12 sind etwa:

- Polyethylenglykole,
- EO/PO-Blockcopolymere wie Jeffamine® M-1000 und Jeffamine® M-2070 von Huntsman, Tetronic® 304, Tetronic® 904, Tetronic® 908, Tetronic® 1107 und Tetronic® 1307 von BASF und Synperonic® T/707 und Synperonic® T/908 von Croda,
- PO/EO/PO-Blockcopolymere wie Jeffamine® ED-2003 von Huntsman und Pluronic® 10R5 und Pluronic® 10R5 von BASF,
- EO/PO/EO-Blockcopolymere wie Pluronic® F38, Pluronic® F68, Pluronic® F77, Pluronic® F87, Pluronic® F88, Pluronic® F98, Pluronic® F108, Pluronic® F127, Pluronic® P65, Pluronic® P84, Pluronic® P85, Pluronic® P104, Pluronic® P105, Pluronic® L35, Pluronic® L44 und Pluronic® L64 von BASF und die äquivalenten Produkte aus der Synperonic® PE-Reihe von Croda,
- Polyoxyethylensorbitanester wie Tween® 20, Tween® 21, Tween® 40, Tween® 60 und Tween® 80 von Croda,
- Polyoxyethylenalkohole wie Brij® L23, Brij® S10, Brij® S20, Brij® S721, Brij® S100, Brij® O20, Brij® C10, Brij® C20, Synperonic® 13/9, Synperonic® 13/10, Synperonic® 13/12 und Synperonic® A20 von Croda,
- Polyoxyethylenfettsäureester wie Myrj® S40, Myrj® S50 und Myrj® S100 von Croda,
- Polyoxyethylenalkylamine wie Atlas® 3789, Atlas® G-3780A, Crodamet® C-15 und Crodamet® T-15 von Croda,
- Umsetzungsprodukte von Hydroxylgruppen-enthaltenden Verbindungen mit Alkylenoxiden und Verbindungen, die dadurch erhältlich sind, dass man die terminalen Hydroxylgruppen von Umsetzungsprodukten von Hydroxylgruppen-enthaltenden Verbindungen mit Alkylenoxiden in Aminogruppen umwandelt.

Bezüglich der Umsetzung von Hydroxylgruppen-enthaltenden Verbindungen mit Alkylenoxiden sind die Ethoxylierung und die Propoxylierung von besonderer Bedeutung. Hierbei geht man üblicherweise wie folgt vor: In einem ersten Schritt bringt man die gewünschte Hydroxylgruppen-enthaltenden Verbindungen mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) erhalten. Bei den Additionsprodukten handelt es sich vorzugsweise um EO-Addukte oder um PO-Addukte oder um EO/PO-Addukte an die jeweilige Hydroxylgruppen-enthaltenden Verbindung; bei den EO/PO-Addukten kann dabei die Anlagerung von EO und PO statistisch oder blockweise erfolgen.

In einer Ausführungsform werden die Verbindungen (B) ausgewählt aus der Gruppe der nichtionischen Verbindungen, die einerseits pro Molekül im Mittel 5 bis 300 Alkylenoxidbausteine und andererseits mindestens zwei H-acide Gruppen enthalten, wobei die Verbindungen (B) im Mittel pro Molekül mehr Ethylenoxideinheiten enthalten als die Summe aller anderen Alkylenoxideinheiten und die Verbindungen (B) im Mittel mindestens 5 Ethylenoxideinheiten pro Molekül enthalten. Verbindungen, die als Alkylenoxidbausteine in Frage kommen, sind vorzugsweise Ethylenoxid (EO), Propylenoxid (PO) und Butylenoxid (BuO).

Dabei gelten die oben genannten Randbedingungen, wonach die Verbindungen (B)

- im Mittel pro Molekül mehr Ethylenoxideinheiten enthalten als die Summe aller anderen Alkylenoxideinheiten und
- im Mittel mindestens 5 Ethylenoxideinheiten pro Molekül enthalten.

Vorzugsweise enthalten die Verbindungen (B) im Mittel pro Molekül 20 bis 300 und insbesondere 50 bis 250 EO-Einheiten.

In einer Ausführungsform werden die Verbindungen (B) ausgewählt aus der Gruppe der EO/PO-Blockcopolymeren mit terminalen Hydroxygruppen und der EO/PO-Blockcopolymeren mit terminalen primären oder sekundären Amingruppen; dabei sind solche Typen besonders bevorzugt, deren HLB-Wert im Bereich von 15 bis 20 liegt.

Beispiele für geeignete EO/PO-Blockcopolymere mit zwei oder mehr terminalen Hydroxygruppen und EO/PO-Blockcopolymere mit mindestens einer terminalen primären oder sekundären Amingruppen sind die Pluronic® F-, Pluronic® P- und Pluronic® L-Typen von BASF, die Synperonic® PE-Typen von Croda sowie die Jeffamine® M- und Jeffamine® ED-Typen von Huntsman.

In einer weiteren Ausführungsform werden die Verbindungen (B) ausgewählt aus der Gruppe der nichtionischen Verbindungen, die Zuckerbausteine als hydrophile Gruppen enhalten. Dabei ist die Gruppe der Tweens, der Polyoxyethylensorbitanester, bevorzugt, deren Zuckerbaustein ein Dehydratationsprodukt von Sorbitol, eines Zuckeralkohols, ist.

In einer Ausführungsform werden die Verbindungen (B) ausgewählt aus der Gruppe der Substanzen der allgemeinen Struktur $R^1$-O-$R^2$-$CH_2CH(R^3)$-X ein. Darin bedeuten:

- $R^1$ eine einwertige organische Gruppe mit 1-12 C-Atomen, die aliphatisch, cycloaliphatisch oder aromatisch sein kann,
- $R^2$ eine Polyoxyalkylengruppe, die aus 5-200 Polyoxyalkyleneinheiten, insbesondere EO- und/oder PO-Einheiten, aufgebaut ist,
- $R^3$ Wasserstoff oder ein aliphatischer Rest mit bis zu 4 C-Atomen,
- X eine Gruppe OH oder $NH_2$.

Dabei gelten die oben genannten Randbedingungen, wonach die Verbindungen (B) im Mittel pro Molekül mehr Ethylenoxideinheiten enthalten als die Summe aller anderen Alkylenoxideinheiten und im Mittel mindestens 5 Ethylenoxideinheiten pro Molekül enthalten. In einer Ausführungsform werden die Verbindungen (B) dabei ausgewählt aus der Gruppe der Anlagerungsverbindungen von EO und/oder PO an Fettalkohole mit 1 bis 18 C-Atomen.

Zu den Verbindungen (C)

Die Verbindungen (C) werden ausgewählt aus der Gruppe der nichtionischen Verbindungen, die einen HLB-Wert von weniger als 12 haben und die pro Molekül mindestens zwei H-acide Gruppen enthalten (= die eine Funktionalität $\geq$ 2 aufweisen). Die Verbindungen (C) sind frei von Oxirangruppen. Die H-aciden Gruppen in den Verbindungen (C) können hinsichtlich ihrer Position terminal oder im Molekül angeordnet sein. Die H-aciden Gruppen sind vorzugsweise terminal. Verbindung (C) mit zwei H-aciden Gruppen sind bevorzugt.

Im Gegensatz zu den Verbindungen (B), die hydrophiler Natur sind, handelt es sich bei den Verbindungen (C) um hydrophobe Substanzen.

Vorzugsweise sind die HLB-Werte der Verbindungen (C) unterhalb von 10.

Vorzugsweise enthalten die Verbindungen (C) und weder Polyalkylenoxidbausteine noch Zuckerbausteine.

Die Verbindungen (C) können von einem synthetischen Standpunkt als Kettenverlängerer ("chain extender") bezeichnet werden.

Unter H-aciden Gruppen werden - wie bereits bei oben bei den Verbindungen (B) ausgeführt - funktionelle Gruppen verstanden, die mit Oxiranringen unter Ringöffnung reagieren können. Im Rahmen der vorliegenden Erfindung sind OH-Gruppen, SiOH-Gruppen, SH-Gruppen sowie COOH-Gruppen besonders bevorzugt als H-acide Gruppen der Verbindungen (C).

Geeignete Polyole mit einer Funktionalität $\geq$ 2 sind: Bisphenol A, hydriertes Bisphenol A, Bisphenol F, 1.4-Butandiol, 1.6-Hexandiol, 1.8- Oktandiol, 1.10-Dekandiol, 1.12-Dodedekandiol, Dimerdiol, Trimethylolpropan, Pentaerythrit, Isosorbid, Diethylenglykol, Triethylenglykol, Tetraethylenglykol, Dipropylenglykol, Tripropylenglykol, Blockcopolymere von Ethylenglykol und Propylenglykol, 1.4-Cyclohexandimethanol und 1.6-Cyclohexandiol.

Geeignete Thiole mit einer Funktionalität $\geq$ 2 sind: Ethylenglykol-di-3-mercaptoproprionat, Ethylenglykol-di-2-mercaptoacetat, Hexandithiol, Trimethylolpropan-tri-(2-mercaptoacetat), Trimethylolpropan-tri-(3 -mercaptoproprionat), Pentaerythrol-tetra-(2-mercaptoacetat) und Pentaerythrol-tetra-(3 -mercaptoproprionat).

Geeignete hydroxyfunktionelle Polysiloxane mit einer Funktionalität $\geq$ 2 sind: Dow Corning® 3-0133, Dow Corning® 3-0213, Dow Corning® 3-0113, Dow Corning® 3-0084, Dow Corning® 2-1273 und Dow Corning® 4-2737 von Dow Corning.

In einer Ausführungsform setzt man als Verbindungen (C) Polyole ein. Diole sind dabei bevorzugt, insbesondere solche mit terminalen OH-Gruppen.

In einer bevorzugten Ausführungsform wird Bisphenol-A als Verbindung (C) eingesetzt.

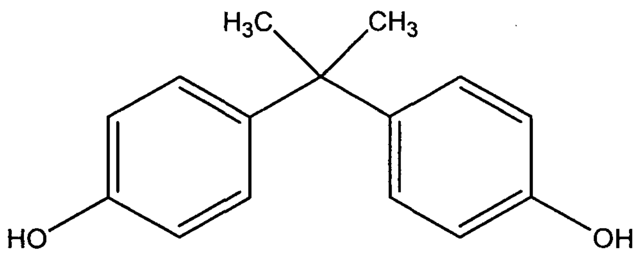

(Bisphenol-A)

Katalysatoren

In den Stufen (i) bis (iii) kann gewünschtenfalls jeweils ein Katalysator eingesetzt werden. In Stufe (i) ist dabei ein Katalysator vorzugsweise obligatorisch.

Beispiele für geeignete Katalysatoren in Stufe (i) sind Bortrifluorid-Amin-Komplexe und Alkalimetall-Alkoholate.

Beispiele für geeignete Katalysatoren in Stufe (ii) sind Triphenylphosphin und Ethyltriphenylphosphoniumjodid.

Beispiele für geeignete Katalysatoren in Stufe (iii) sind Triphenylphosphin, Thiodiglykol, Dimethylsulfid, Diethylsulfid, Triethlyamin, N,N-Dimethylanilin und N,N-Dibenzylmethylamin.

Inhibitoren

In Stufe (iii) wird eine Acrylierung durchgeführt. Hier können im Prinzip alle dem Fachmann einschlägig bekannte Techniken der Acrylierung zum Einsatz kommen. In einer Ausführungsform werden Acrylierungen - gegebenenfalls in Anwesenheit eines Katalysators - in Gegenwart eines Inhibitors und in einer Sauerstoff-haltigen Atmosphäre, etwa Luft, durchgeführt. Beispiele geeigneter Inhibitoren sind dabei 4-Methoxyphenol, Phenothiazin, Hydrochinon, 2,6-di-tert.-Butyl-4-methylphenol, 2-tert.-Butyl-4-hydroxyanisol, Triphenylphosphit und Dinitrobenzol.

Verwendung

Die erfindungsgemäßen Dispersionen zeichnen sich durch gute Handhabbarkeit und Applizierbarkeit (= Einarbeitbarkeit in anwendungstechnisch brauchbare Systeme) aus und eignen sich zur Beschichtung unterschiedlichster Substrate, insbesondere Holz, Kunststoffe, Metalle, Papier, Karton, Glas, Keramik, Leder, Textilien durch Spritzen, Gießen, Walzen, Rakeln, Streichen und Tauchen.

Den erfindungsgemäßen Dispersionen können gewünschtenfalls weitere beschichtungsübliche Zuschlagstoffe zugesetzt werden wie Photoinitiatoren, Entschäumer, Entlüfter, Verlaufmittel, UV-Absorber und Lichtschutzmittel, Pigmente, Farbstoffe, Füllstoffe, Rheologieadditive, Wachse, Mattierungsmittel, Dispergiermittel, Biozide und Koaleszenzmittel.

Ein weiterer Gegenstand der Erfindung ist daher die Verwendung der wie oben beschrieben erhältlichen wässrigen Dispersionen von Expoxyacrylaten als strahlungshärtbare Massen für Beschichtungssysteme wie pigmentierte und unpigmentierte Lacke und Beschichtungsmassen sowie Farben und dergleichen.

Insbesondere eignen sich die wässrigen Dispersionen der Expoxyacrylate zur Beschichtung von Holz, sowohl als Primer als auch als Topcoat. Generell wurde eine ausgezeichnete Haftung auf Holz festgestellt. Als Topcoat zeichnen sie sich außerdem durch sehr hohen Glanz und gute chemische Resistenz (zum Beispiel gegen Essigsäure, Ammoniak und Ethanol), ferner durch gute Kratz- und Abriebfestigkeit aus.

Verfahren

Ein weiterer Erfindungsgegenstand ist ein Verfahren zur Herstellung wässriger, strahlungshärtbarer, Epoxyacrylat-Dispersionen enthaltend (a) ein Epoxyacrylatharz (P*) mit mindestens 2 Acrylatgruppen pro Molekül, wobei dieses Epoxyacrylatharz bei 25 °C in Wasser nicht selbst-dispergierend ist, und (b) einen Dispergator (D*) mit mindestens 1 Acrylatgruppe pro Molekül, indem man

zunächst in einer ersten Stufe (i)

- ein oder mehrere Verbindungen (A), die ausgewählt sind aus der Gruppe der nichtionischen Verbindungen, die einen HLB-Wert von weniger als 12 haben und pro Molekül mindestens zwei Oxirangruppen enthalten, mit

- ein oder mehrere Verbindungen (B), die ausgewählt sind aus der Gruppe der nichtionischen Verbindungen, die einen HLB-Wert im Bereich von 12 bis 20 aufweisen und pro Molekül mindestens eine H-acide Gruppen (ZH) enthalten

- gegebenenfalls in Gegenwart eines Katalysators - umsetzt, wobei man die Verbindungen (A) und (B) in einem Äquivalentverhältnis EpO(A) : ZH (B) im Bereich von 1,3 : 1 bis 400 :1 einsetzt,

die erhaltene Reaktionsmischung, in einer zweiten Stufe (ii)

- mit ein oder mehreren nichtionischen Verbindungen, die einen HLB-Wert von weniger als 12 haben und pro Molekül mindestens zwei Oxirangruppen enthalten (Verbindungen A) und
- mit ein oder mehreren Verbindungen (C), die ausgewählt sind aus der Gruppe der nichtionischen Verbindungen, die einen HLB-Wert von weniger als 12 haben und die pro Molekül mindestens zwei H-acide Gruppen enthalten,

- gegebenenfalls in Gegenwart eines Katalysators - umsetzt, wobei man die Verbindungen (A) und (C) in einem Äquivalentverhältnis EpO(A) : ZH (C) im Bereich von 1,1 : 1 bis 20 : 1 einsetzt,

die erhaltene Reaktionsmischung in einer dritten Stufe (iii)

- gegebenenfalls in Gegenwart eines Katalysators - mit Acrylsäure unter Ringöffnung aller Epoxygruppen umsetzt,

die erhaltene Reaktionsmischung in einer vierten Stufe (iv)
in Wasser dispergiert.

## Beispiele

### 1. Eingesetzte Substanzen

- **Pluronic® F 88** - difunktionelles EO/PO/EO-Blockcopolymer mit terminalen Hydroxygruppen, Molgewicht ca. 11000, von Fa. BASF
- **D.E.R.™ 331™** - Bisphenol A Diglycidylether, von Fa. Dow Chemical
- **Anchor® 1040** Curing Agent - modifizierter Aminkomplex von Bortrifluorid, von Fa. Air Products
- **Bisphenol A** - von Fa. Bayer MaterialScience
- **Triphenylphosphin** - von Fa. Arkema
- **4-Methoxyphenol** - von Fa. Acros Organics
- **Acrylsäure** - stabilisiert mit 200 ppm 4-Methoxyphenol, von Fa. BASF
- **Ethoxypropanol** - von Fa. Brenntag
- **Chem® Res E 20** - Bisphenol A Diglycidylether, von Fa. Cognis
- **WUQ** - Kondensationsprodukt von propoxyliertem Pentaerythrit (5 PO-Einheiten im Durchschnitt) mit Epichlorhydrin, von Fa.Cognis
- **Jeffamin® M-2070** - monofunktionelles EO/PO-Blockcopolymer mit terminaler Amingruppe, Molgewicht ca. 2000, von Fa.Huntsmann
- **PU-Acrylat-Dispersion** - Bayhydrol® UV 2282, eine strahlenhärtbare, ionische Polyurethanacrylat-Dispersion der Fa. Bayer MaterialScience mit 39% Festkörper und einem pH-Wert von 7,4. Wurde eingesetzt als Referenzprodukt zur Charakterisierung der Materialeigenschaften des erfindungsgemäßen Beispiels (vergleiche im untenstehenden Datenteil unter Nr. 3.)

### 2. Mess- und Prüfmethoden

**Säurezahl:** nach NF EN ISO 660

**Viskosität:** bestimmt bei 25 °C nach ISO 3219

Alle Viskositaeten wurden gemessen bei einem Schergefälle von 40 $sec^{-1}$ auf einem Bohlin C-VOR Rheometer der Fa. Malvern Instruments.

## Epoxidgehalt

Zur Charakterisierung des Gehalts von Verbindungen an Oxirangruppen ("Epoxidgruppen") wurde eine Epoxidtitration durchgeführt. Die dabei erhaltene Epoxidzahl (%EpO) gibt an, wie viel Gramm Oxiran-Sauerstoff in 100 Gramm einer Probe enthalten sind.

Der Titration liegt folgendes Prinzip zu Grunde: Man fügt eine Lösung mit überschüssigem Tetraethylammoniumbromid zur Probe, die Oxiranringe enthält. Danach titriert man die Mischung mit einer Lösung von Perchlorsäure in Eisessig, wobei eine äquimolare Menge Bromwasserstoff freigesetzt wird. Der Bromwasserstoff reagiert unter Ringöffnung mit den Oxiranringen und bildet das entsprechende Bromhydrin.

$$((CH_3\text{-}CH_2)_4N)^{\oplus} Br^{\ominus} + HClO_4 \longrightarrow ((CH_3\text{-}CH_2)_4N)^{\oplus} ClO_4^{\ominus} + HBr$$

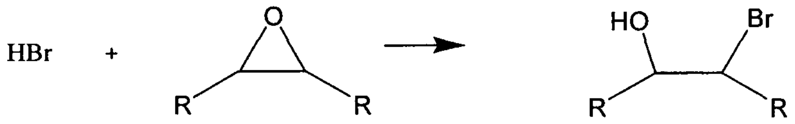

Als Indikator setzt man Kristallviolett ein. Die Bestimmung setzt die Abwesenheit von Wasser, Basen und Aminen voraus.

Es kamen folgende Reagentien zum Einsatz: (1) 0,1-N-Perchlorsäure (Fa. Merck) in Eisessig; (2) Tetraethylammoniumbromid (Fa. Fluka) in Form einer Lösung von 100 g Tetraethylammoniumbromid in 400 ml Eisessig; (3) Kristallviolett (Fa. Merck); zur Herstellung der Indikatorlösung wurden 0,2 g Kristallviolett in 100 ml Eisessig gelöst.

Durchführung: 0,2 bis 0,5 g der Probe, die Oxiranringe enthält werden in einem Erlenmeyerkolben vorgelegt. Die Probe wird in 50 ml wasserfreiem Aceton gelöst. Dann fügt man 10 ml Tetraethylammoniumbromidlösung (siehe oben) und 3 Tropfen Kristallviolettlösung (siehe oben) hinzu. Die Mischung wird mit einer 0,1-N Lösung von Perchlorsäure in Eisessig titriert. Der Endpunkt ist erreicht, sobald die Farbe sich von blau nach grün ändert.

Vor Durchführung der eigentlichen Titration führt man eine Blindprobe durch (diese enthält keine Oxiranverbindung), um Meßfehler auszuschließen.

Auswertung: Der Epoxidgehalt %EpO wird wie folgt berechnet:

$$\%\ EpO = [(a - b) * 0{,}160] / E$$

a := Milliliter 0,1 n $HClO_4$ Lösung, die zur Titration benötigt wird

b := Milliliter 0,1 n $HClO_4$ Lösung, die im Blindversuch benötigt wird

E := Einwaage der Probe in Gramm

## Epoxid-Äquivalentgewicht

Das Epoxyäquivalentgewicht (EEW) kann aus der Epoxidzahl (siehe oben) wie folgt berechnet werden:

$$EEW = 16 * 100 / \%\ EpO$$

Die Dimension des EEW ist g/äq.

## Phaseninversionstemperatur

Ein Probe der jeweiligen Dispersion wurde bei gegebener Temperatur aus den Reaktor entnommen und ein Tropfen mittels Glasstab in einem Becherglas mit ca. 300 bis 400 ml Wasser verrieben. Dabei zeigt eine rasche sowie vollständige Verteilung des Dispersionstropfens in Wasser das Vorliegen einer O/W-Dispersion und damit die betreffende Phaseninversionstemperatur an. Wenn der Tropfen sich gar nicht verteilt, liegt weiterhin eine W/O-Dispersion vor und die Phaseninversionstemperatur ist noch nicht erreicht.

**pH-Wert:** bei 25,0 °C nach ISO 976

**Festkörpergehalt:** nach ISO 3251

2 g der zu prüfenden Dispersion wurden für 60 Minuten bei 125°C in einem Umlufttrockenschrank getrocknet.

**Partikelgrößen-Verteilung**

Die Partikelgrößen-Verteilungskurven wurden mittels dynamischer Lichtstreuung bei 25,0 °C mit einem Mastersizer Hydro 2000M der Fa. Malvern Instruments bestimmt.

**Lagerstabilität**

Die zu prüfende Dispersionen wurde in einem verschlossenen Glasgefäß bei gegebener Temperatur gelagert und nach Ende der Lagerzeit auf Veränderungen hinsichtlich Teilchengröße und -verteilung, Viskosität, Phasentrennung und Absetzverhalten untersucht.

**Probenpräparation**

Alle Laborprüfungen zur UV-Härtung wurden unter Luft mit einem UV-Bandtrockner vom Typ M-40-2xl-R-TR-SLC-SO-Inert der Fa. IST Metz durchgeführt, der mit einer 200 Watt/cm Quecksilbermitteldrucklampe ausgerüstet war. Die resultierende Energiedichte wurde bestimmt mit einem UV Power Puck der Fa. EIT durch Aufsummierung der jeweiligen UV-A (320 - 390 nm), UV-B (280 - 320 nm), UV-C (250 - 260 nm) and UV-V (395 - 445 nm) Energiedichten. Alle materialseitigen und anwendungstechnischen Eigenschaften wurden basierend auf Mischungen von 99 Gew.% der betreffenden Dispersion and 1 Gew.% des Photoinitiators Irgacure® 184 der Fa. Ciba ermittelt. Entsprechende Filme wurden durch Rakelaufzüge mit gewünschter Schichtdicke auf dem jeweiligen Substrat hergestellt, dann bei 50°C für 10 Minuten in einem Umluftofen physikalisch getrocknet zur Entfernung des Wassers und anschließend vollständig UV gehärtet bei einer Energiedichte von 1500 mJ/cm$^2$. Alle Filme wurden bei 25°C für 24 Stunden vor jeder Messung äquilibriert.

**Pendelhärte:** nach Persoz nach ISO 1522

Zur Bestimmung der Pendelhärte wurden Filme mit einer Naßschichtdicke von 150 µm auf QD-36 kaltgewalzten Stahlblechen der Fa. Q-Lab hergestellt und nach oben beschriebener Probenverarbeitung einschließlich UV-Härtung vermessen.

**Glanz:** nach ISO 2813

Zur Bestimmung des Glanzes wurden Filme mit Naßschichtdicken von 12 µm und 150 µm auf Form 2A Opazitätskarten der Fa. Leneta hergestellt und nach oben beschriebener Probenverarbeitung einschließlich UV-Härtung mit dem Glanzmessgerät micro gloss 60° der Fa. BYK-Gardner vermessen.

**Chemikalienbeständigkeit:** nach DIN 68861-1

Die Chemikalienbeständigkeit wurde ermittelt auf Buche-Substraten, die zuerst mit einem Schleifpapier mit einer P 180 Aluminiumoxid-Körnung vorbehandelt, dann mit der betreffenden Mischung aus Dispersion und Photoinitiator mit einer Naßschichtdicke von 150 µm beschichtet, physikalisch getrocknet und dann UV gehärtet wurden. Nach Schleifen dieser ersten Schicht mit einem Schleifpapier mit einer P 320 Aluminiumoxid-Körnung wurde eine zweite Schicht der gleichen Mischung aus Dispersion und Photoinitiator mit einer Naßschichtdicke von 150 µm aufgetragen, physikalisch getrocknet und zum Abschluß UV gehärtet. Die Chemikalienbeständigkeit wurde dann entsprechend DIN 68861-1 ermittelt, nachdem die beschichteten Proben für 1 Woche bei 25°C zur Konditionierung gelagert worden waren.

**Haftung auf Metall:** nach ISO 2409

Zur Ermittlung der Haftung auf Metall wurden zunächst Filme mit einer Naßschichtdicke von 150 µm auf QD-36 kaltgewalzten Stahlblechen, auf S-36-I eisenphophatierten Stahlblechen, auf A-36 Aluminiumblechen und ALQ-36 chromatierten Aluminiumblechen der Fa. Q-Lab hergestellt. Nach der oben beschriebenen Probenverarbeitung einschließlich UV-Härtung wurde die Haftung mittels Gitterschnitt-Prüfung mit dem Klebeband Scotch® Crystal Clear der

Fa. 3M bestimmt.

### 3. Beispiele

**Beispiel 1 (erfindungsgemäß)**

Stufe (i):

14,852 kg Pluronic® F 88 und 10,043 kg D.E.R.™ 331™ wurden unter Stickstoff-Atmosphäre in einem beheizbaren Reaktor vorgelegt und auf 100°C unter langsamem Rühren erwärmt, bis eine klare Schmelze entstanden ist. Dann wurden 0,11 kg des Katalysators Anchor® 1040 Curing Agent zugegeben und auf 140°C erwärmt. Die Reaktion setzte umgehend ein, wobei die Exothermie gering war. Bei Erreichen der Reaktionstemperatur von 140°C wurde eine Probe zur Bestimmung des Epoxidgehaltes entnommen sowie dann stündlich im weiteren Reaktionsverlauf. Nach Erreichen des gewünschten Epoxidgehaltes (nach ca. 5 Stunden) im Bereich von 2,86 - 2,96 %EpO wurde sofort abgekühlt und bei 90°C zu reinen Verdünnungszwecken 24,995 kg D.E.R.™ 331™ zugegeben. Das gelblich viskose, leicht trübe Endprodukt wurde bei 60°C über einen groben Filterbeutel abfiltriert, da es ab 40°C zu kristallisieren begann und bei Raumtemperatur fest ist. Das Endprodukt wies eine Viskosität von 3500 mPas bei 40°C auf und das Epoxid-Äquivalentgewicht (EEW) lag bei 286 g/äq.

Stufe (ii):

37,51 kg D.E.R.™ 331™, 13,75 kg des Produktes aus Stufe (i), 14,02 kg Bisphenol A und 0.078 kg des Katalysators Triphenylphosphin wurden in einen beheizbaren Reaktor unter Stickstoff-Atmosphäre gefüllt und unter Rühren homogenisiert. Der Reaktorihalt wurde dann auf 140°C erhitzt, wobei die Exothermie der Reaktion den Reaktorinhalt bis etwa 160°C aufheizte. Nach Durchlaufen der Exothermie wurde der Reaktorinhalt noch für 0.5 h auf 160°C gehalten.

Danach wurde eine Probe zur Bestimmung des Epoxidgehaltes entnommen; sobald dieser im Bereich von 2,80 - 3,20 % EpO lag, wurde der Reaktorinhalt auf 90 - 95°C abgekühlt. Bei Erreichen von 100°C wurden 0,19 kg des Inhibitors 4-Methoxyphenol zugeben und mit der Einleitung von Luft in die Reaktionsmischung begonnen.

Stufe (iii):

0,37 kg des Katalysators Triphenylphosphin wurden in 9,06 kg Acrylsäure gelöst und die Hälfte dieser Lösung nach Erreichen der Solltemperatur des Reaktorinhaltes von 90 bis 95°C über eine Dosiervorlage innerhalb von 10 Minuten langsam zugegeben. Nach 2 h Reaktionszeit bei 90 - 95°C wurde die andere Hälfte in der gleichen Weise zugegbDer Reaktorinhalt wurde so lange bei 90 bis 95°C weitergerührt, bis der Epoxidgehalt unter 0,2 % EpO gesunken war, wobei die Säurezahl nicht unter 1 mg KOH/g fallen darf, was etwa 10 - 15 h dauerte.

Stufe (iv):

Danach wurden bei 85°C langsam unter Rühren 9,3 kg Ethoxypropanol zudosiert, 0.5 h weiter gerührt und schnell 11,36 kg entionisiertes Wasser zugesetzt. Dabei bildete sich eine homogene W/O-Dispersion und die Temperatur des Reaktorinhaltes fiel auf 75°C ab. Der Reaktorinhalt wurde dann weiter auf 55°C abgekühlt. Bei der Absenkung der Temperatur entstand über eine Phaseninversion eine O/W-Dispersion, was von einem starken Viskositätsanstieg begleitet war. Die Phaseninversionstemperatur lag bei 60°C Nach Erreichen von 55°C wurde noch 0,5 h gerührt. Dann wurden 17,95 kg entionisiertes Wasser über einen Zeitraum von 1 h langsam zugegeben, wobei die Viskosität stark absank. Danach wurden innerhalb einer weiteren Stunde 35,91 kg entionisiertes Wasser zugesetzt und noch 1 h nachgerührt. Anschließend wurde die entstandene Epoxyacrylat-Dispersion über einen Filter DS 900 der Fa. SeitzSchenck abfiltriert.

Das Endprodukt hatte bei 25 °C eine Viskosität von 148 mPa·s und einen pH-Wert von 6,51. Es wies zudem einen Festkörpergehalt von 49.0 Gew.% auf sowie eine mittlere Teilchengröße $D_{50}$ von 425 nm.

**Beispiel 2 (zum Vergleich)**

Zu Vergleichszwecken wurde eine Epoxyacrylat-Dispersion gemäß WO 2006/056331 hergestellt und zwar wie folgt:

30,00 kg Chem® Res E 20 und 0.046 kg WUQ wurden in einen beheizbaren Reaktor unter Stickstoff-Atmosphäre gefüllt und unter Rühren homogenisiert. Anschließend wurden 7,35 kg Jeffamine® M-2070, 7,70 kg Bisphenol A und 0,033 kg

des Katalysators Triphenylphosphin zugeben und der Reaktorinhalt auf 150°C erhitzt, wobei die Exothermie der Reaktion den Reaktorinhalt bis auf etwa 165 bis 170°C aufheizte. Nach Durchlaufen der Exothermie wurde der Reaktorinhalt noch für 0.5 h bei 165 bis 170°C gehalten. Danach wurde eine Probe zur Bestimmung des Epoxidgehaltes entnommen. Sobald dieser bei 2,80 bis 3,20 % EpO lag, wurde der Reaktorinhalt auf 85 - 90°C abgekühlt. Bei 85 bis 90°C wurden 0,13 kg des Inhibitors 4-Methoxyphenol zugegeben und mit der Einleitung von Luft begonnen. Innerhalb von 0,5 h wurde bei 85 bis 90°C eine Mischung aus 0,37 kg des Katalysators Triphenylphosphin und 9,55 kg Acrylsäure über eine Dosiervorlage langsam zugegeben. Der Reaktorinhalt wurde so lange bei 90 bis 95°C weitergerührt, bis der Epoxidgehalt unter 0,2 % EpO gesunken war, wobei die Säurezahl nicht unter 1 mg KOH/g fallen darf, was etwa 10 - 16 h dauerte, dann wurden 6,47 kg Ethoxypropanol zugesetzt.

Nach Abkühlen auf 80°C wurden 8,87 kg entionisiertes Wasser zugesetzt, wobei die Viskosität der Mischung absank. Bei der Absenkung der Temperatur entstand über eine Phaseninversion eine o/w Dispersion, was von einem starken Viskositätsanstieg begleitet war. Die Phaseninversionstemperatur lag bei 30°C. Dann wurde bei 30°C noch 0.5 h weitergerührt. Anschließend wurden noch 36,76 kg entionisiertes Wasser zugegeben. Die entstandene Epoxyacrylat-Dispersion wurde über einen Filter DS 900 der Fa. SeitzSchenck abfiltriert.

Das Endprodukt hatte bei 25 °C eine Viskosität von 450 mPa·s, einen pH-Wert von 5,7 und wies einen Festkörpergehalt von 50,5 Gew.% auf sowie eine mittlere Teilchengröße D50 von 550 µm.

## Eigenschaften und Anwendungsbeispiele

**Phaseninversionstemperatur**

| | Phaseninversionstemperatur |
|---|---|
| Beispiel 1 (erfindungsgemäß) | 60 °C |
| Beispiel 2 (zum Vergleich) | 30 °C |

Das erfindungsgemäße Beispiel zeigt eine deutlich höhere Phaseninversionstemperatur als das nicht erfindungsgemäße Vergleichsbeispiel, die mit der Lagerstabilität direkt korreliert ist. Während das erfindungsgemäße Beispiel eine ausgezeichnete, praxisgerechte Lagerstabilität von mindestens 6 Monaten aufweist, liegt die des nicht erfindungsgemäßen Vergleichsbeispiels bei weniger als 10 Tagen, was für eine industrielle Anwendbarkeit völlig unzureichend ist. Die mangelhafte Lagerstabilität des nicht erfindungsgemäßen Beispiels äußerte sich in einer visuell klar sichtbaren Phasentrennung.

**Lagerstabilität**

| | Lagerstabilität bei 25 °C | | | | | |
|---|---|---|---|---|---|---|
| | 1 Tag | 10 Tage | 28 Tage | 2 Monate | 4 Monate | 6 Monate |
| Beispiel 1 (erfindungsgemäß) | stabil | stabil | stabil | stabil | stabil | stabil |
| Beispiel 2 (zum Vergleich) | stabil | nicht stabil | nicht stabil | nicht stabil | nicht stabil | nicht stabil |

Die Bestimmung der Pendelhärte nach physikalischer Trocknung und vor UV-Härtung resultierte für das erfindungsgemäße Beispiel in einem bereits klebfreien Film, der zwar noch nicht über die mechanischen und chemischen Beständigkeiten des UVgehärteten Filmes verfügt, dessen mechanische Stabilität aber eine problemlose, sofortige Weiterverarbeitung auf Beschichtungsanlagen zulässt. Das nicht erfindungsgemäße Beispiel lieferte dagegen nach physikalischer Trocknung und vor UV-Härtung einen so klebrigen Film, dass eine Pendelhärtemessung nicht möglich war, was ein schnelle Weiterverarbeitung auf Beschichtungsanlagen ausschließt. Die erreichbaren Pendelhärten nach physikalischer Trocknung und UV-Härtung liegen auf vergleichbarem Niveau, auch wenn das erfindungsgemäße Beispiel selbst hier einen kleinen Vorteil aufweist.

**Pendelhärte nach Persoz**

| | Pendelhärte nach Persoz | |
|---|---|---|
| | nach physikalischer Trocknung und vor UV-Härtung | nach physikalischer Trocknung und nach UV-Härtung |
| Beispiel 1 (erfindungsgemäß) | 53 sec | 268 sec |
| Beispiel 2 (zum Vergleich) | < 5 sec | 259 sec |

Die Überlegenheit der erfindungsgemäßen Dispersion gegenüber der Vergleichsdispersion ist hinsichtlich der Pendelhärte nach physikalischer Trocknung und vor UV-Härtung um Größenordnungen besser.

Die nachfolgenden Daten illustrieren: Bei den anwendungstechnischen Eigenschaften Pendelhärte und Glanz übertrifft die erfindungsgemäße, nichtionische Dispersion die als Standard herangezogene kommerziell erhältliche, ionische Polyurethanacrylat-Dispersion in allen Bewertungskriterien.

**Pendelhärte nach Persoz**

| | Pendelhärte nach Persoz | |
|---|---|---|
| | nach physikalischer Trocknung und vor UV-Härtung | nach physikalischer Trocknung und nach UV-Härtung |
| Beispiel 1 (erfindungsgemäß) | 53 sec | 268 sec |
| PU-Acrylat-Dispersion | 26 sec | 247 sec |

**Glanz**

| | Glanz | |
|---|---|---|
| | Beispiel 1 (erfindungsgemäß) | PU-Acrylat-Dispersion |
| 12 μm Naßschichtdicke | 101 | 87 |
| 150 μm Naßschichtdicke | 99 | 89 |

**Chemikalienbeständigkeit**

| | Einwirkzeit | Beispiel 1 (erfindungsgemäß) | PU-Acrylat-Dispersion |
|---|---|---|---|
| Essigsäurelösung, 10 Gew.% | 1 h | 0 | 0 |
| Ammoniaklösung, 10 Gew.% | 2 min | 0 | 0 |
| wäßrige Ethanollösung, 48 Vol.% | 1 h | 0 | 0 |
| Rotwein | 6 h | 0 | 0 |
| Kaffee | 16 h | 0 | 0 |
| Kondensmilch, 10% Fett | 16 h | 0 | 0 |
| deionisiertes Wasser | 16 h | 0 | 0 |
| Ethylacetat - Butylacetat, 1:1 (Vol.%) | 10 sec | 0 | 0 |
| Butter | 16 h | 0 | 0 |
| Olivenöl | 16 h | 0 | 0 |
| Senf | 6 h | 0 | 0 |

In der Holzbeschichtung für hochwertige Möbeloberflächen sind die Chemikalienbeständigkeiten über die Norm DIN 68861-1 definiert, wo für qualitativ anspruchsvolle Anwendungen das Niveau 1 B zu erreichen ist, dem die in der vorangehenden Tabelle aufgeführten Einwirkzeiten bestimmter Chemikalien entsprechen. Die Bewertungsstufen reichen von 5 = starke optisch sichtbare Veränderungen der beschichteten Oberfläche oder Zerstörung bis hin zur Stufe 0 = keine optisch sichtbaren Veränderungen der beschichteten Oberfläche. Die PU-Acrylat-Dispersion ist im Holzbeschichtungsmarkt bekannt dafür, das hohe Niveau 1 B zu erreichen. Mit der erfindungsgemäßen Dispersion lassen sich ebenfalls die gleichen, exzellenten chemischen Beständigkeiten erzielen, die in der Holzbeschichtungsindustrie unerläßlich sind.

**Haftung auf Metall**

| | Beispiel 1 (erfindungsgemäß) | | | PU-Acrylat-Dispersion | | |
|---|---|---|---|---|---|---|
| | sofort | nach 24 h | nach 72 h | sofort | nach 24 h | nach 72 h |
| kaltgewalzter Stahl | 0 | 0 | 0 | 4 | 2 | 0 |
| eisenphosphatierter Stahl | 0 | 0 | 0 | 2 | 0 | 0 |
| Aluminium | 0 | 0 | 0 | 4 | 2 | 0 |
| chromatiertes Aluminium | 0 | 0 | 0 | 0 | 0 | 0 |

Eine praxisgerechte Haftung auf Metalloberflächen ist für strahlenhärtende Bindemittelsysteme generell ohne spezielle Additive nur sehr schwierig zu realisieren. Ein geeignetes Prüfkriterium zur Bestimmung der Haftung ist der Gitterschnitt-Test, dessen Bewertungsstufen von 5 = mehr als 65% Filmablösung an den Kanten des Gitterschnittes bis hin zur Stufe 0 = keine Filmablösung an den Kanten des Gitterschnittes reichen. Während die PU-Acrylat-Dispersion und die erfindungsgemäße Dispersion auf verschiedenen, für die Haftung optimierten Aluminium- und Stahlsubstraten eine sehr gute Haftung bereits direkt nach der UV-Härtung zeigen, ist auf den nicht vorbehandelten Aluminuim- und Stahlsubstraten nur für die erfindungsgemäße Dispersion weiterhin eine hervorragende Soforthaftung zu konstatieren. Bei der Polyurethanacrylat-Dispersion entwickelt sich die Haftung erst über einen Zeitraum von mehreren Tagen, so dass eine sofortige Weiterverarbeitung in diesem Fall nicht möglich ist.

## Patentansprüche

1. Wässrige strahlenhärtbare Epoxyacrylat-Dispersionen enthaltend (a) ein Epoxyacrylatharz (P*) mit mindestens 2 Acrylatgruppen pro Molekül, wobei dieses Epoxyacrylatharz bei 25 °C in Wasser nicht selbst-dispergierend ist, und (b) einen Dispergator (D*) mit mindestens 1 Acrylatgruppe pro Molekül, enthaltend Verbindungen (A), die ausgewählt sind aus der Gruppe der nichtionischen Verbindungen, die einen HLB-Wert von weniger als 12 haben und pro Molekül mindestens zwei Oxirangruppen enthalten, Verbindungen (B), die ausgewählt sind aus der Gruppe der nichtionischen Verbindungen, die einen HLB-Wert im Bereich von 12 bis 20 aufweisen und pro Molekül mindestens eine H-acide Gruppe (ZH) enthalten, und Verbindungen (C) die ausgewählt sind aus der Gruppe der nichtionischen Verbindungen, die einen HLB-Wert von weniger als 12 haben und die pro Molekül mindestens zwei H-acide Gruppen enthalten wobei die Verbindungen (A) einerseits Bausteine sind für (D*) und andererseits für (P*), die Verbindungen (B) die ein hydrophiles Strukturelement umfassen Bausteine sind für (D*) und die Verbindungen (C) Bausteine sind für (P*), wobei diese Dispersionen erhältlich sind, indem man

   - zunächst in einer ersten Stufe (i) ein oder mehrere Verbindungen (A) mit ein oder mehrere Verbindungen (B) - gegebenenfalls in Gegenwart eines Katalysators - umsetzt, wobei man die Verbindungen (A) und (B) in einem Äquivalentverhältnis EpO(A) : ZH (B) im Bereich von 1,3 : 1 bis 400 :1 einsetzt, wobei eine nichtacrylierte Vorstufe (D) von (D*) entsteht:

     $$A + B \rightarrow A + D$$

   - die in der ersten Stufe erhaltene Reaktionsmischung, in einer zweiten Stufe (ii) mit ein oder mehreren Verbindungen (A) und mit ein oder mehreren Verbindungen (C) - gegebenenfalls in Gegenwart eines Katalysators - umsetzt, wobei man die Verbindungen (A) und (C) in einem Äquivalentverhältnis EpO(A) : ZH (C) im Bereich von 1,1 : 1 bis 20 : 1 einsetzt, wobei eine nichtacrylierte Vorstufe (P) von (P*) aus (A) und (C) entsteht und (D) teilweise oligomerisiert wobei (D') entsteht:

A + C + D →A + P + D + D'

• die in der zweiten Stufe erhaltene Reaktionsmischung in einer dritten Stufe (iii) - gegebenenfalls in Gegenwart eines Katalysators - mit Acrylsäure unter Ringöffnung aller Epoxygruppen umsetzt, wobei das acrylierte (P*) aus der nichtacrylierte Vorstufe (P) entsteht und wobei der acrylierte (D*) aus der nichtacrylierte Vorstufe (D) und oligomerisierte Vorstufe (D') entsteht,
• die in der dritten Stufe erhaltene Reaktionsmischung in einer vierten Stufe (iv) in Wasser dispergiert.

**2.** Epoxyacrylat-Dispersionen nach Anspruch 1, wobei die Verbindungen (A) ausgewählt werden aus der Gruppe der Glycidylether, die zwei oder mehr Glycidylgruppen pro Molekül enthalten.

**3.** Epoxyacrylat-Dispersionen nach Anspruch 2, wobei man Bisphenol-A-diglycidylether als Verbindung (A) einsetzt.

**4.** Epoxyacrylat-Dispersionen nach einem der Ansprüche 1 bis 3, wobei die Verbindungen (B) ausgewählt werden aus der Gruppe der Polyethylenglykole, EO/PO-Blockcopolymere, PO/EO/PO-Blockcopolymere und EO/PO/EO-Blockcopolymere.

**5.** Epoxyacrylat-Dispersionen nach einem der Ansprüche 1 bis 4, wobei die Verbindungen (C) ausgewählt werden aus der Gruppe der Polyole mit zwei oder mehr OH-Gruppen pro Molekül.

**6.** Epoxyacrylat-Dispersionen nach Anspruch 5, wobei man Bisphenol A als Verbindung (C) einsetzt.

**7.** Epoxyacrylat-Dispersionen nach einem der Ansprüche 1 bis 6, wobei man in Stufe (i) einen Katalysator einsetzt.

**8.** Epoxyacrylat-Dispersionen nach einem der Ansprüche 1 bis 7, wobei man in Stufe (i) die Verbindungen (A) und (B) in einem Äquivalentverhältnis EpO(A) : ZH (B) im Bereich von 1,5 : 1 bis 50 :1 einsetzt.

**9.** Epoxyacrylat-Dispersionen nach einem der Ansprüche 1 bis 8, wobei man in Stufe (ii) die Verbindungen (A) und (C) in einem Äquivalentverhältnis EpO(A) : ZH (C) im Bereich von 1,8 : 1 bis 2,2 : 1 einsetzt.

**10.** Verwendung der Epoxyacrylat-Dispersionen nach einem der Ansprüche 1 bis 9 als strahlungshärtbare Massen für Beschichtungssysteme.

**11.** Verwendung nach Anspruch 10, wobei man die Epoxyacrylat-Dispersionen zur Beschichtung von Holz, Metall, Papier oder Karton einsetzt.

**12.** Verfahren zur Herstellung wässriger strahlenhärtbarer Epoxyacrylat-Dispersionen enthaltend (a) ein Epoxyacrylatharz (P*) mit mindestens 2 Acrylatgruppen pro Molekül, wobei dieses Epoxyacrylatharz bei 25 °C in Wasser nicht selbst-dispergierend ist, und (b) einen Dispergator (D*) mit mindestens 1 Acrylatgruppe pro Molekül, indem man

• zunächst in einer ersten Stufe (i) ein oder mehrere Verbindungen (A), die ausgewählt sind aus der Gruppe der nichtionischen Verbindungen, die einen HLB-Wert von weniger als 12 haben und pro Molekül mindestens zwei Oxirangruppen enthalten, mit ein oder mehrere Verbindungen (B), die ausgewählt sind aus der Gruppe der nichtionischen Verbindungen, die einen HLB-Wert im Bereich von 12 bis 20 aufweisen und pro Molekül mindestens eine H-acide Gruppe (ZH) enthalten - gegebenenfalls in Gegenwart eines Katalysators - umsetzt, wobei man die Verbindungen (A) und (B) in einem Äquivalentverhältnis EpO(A) : ZH (B) im Bereich von 1,3 : 1 bis 400 :1 einsetzt, wobei eine nichtacrylierte Vorstufe (D) von (D*) entsteht:

A + B → A + D

• die in der ersten Stufe erhaltene Reaktionsmischung, in einer zweiten Stufe (ii) mit ein oder mehreren nichtionischen Verbindungen, die einen HLB-Wert von weniger als 12 haben und pro Molekül mindestens zwei Oxirangruppen enthalten (Verbindungen A) und mit ein oder mehreren Verbindungen (C), die ausgewählt sind aus der Gruppe der nichtionischen Verbindungen, die einen HLB-Wert von weniger als 12 haben und die pro Molekül mindestens zwei H-acide Gruppen enthalten, -gegebenenfalls in Gegenwart eines Katalysators - umsetzt, wobei man die Verbindungen (A) und (C) in einem Äquivalentverhältnis EpO(A) : ZH (C) im Bereich von 1,1 : 1 bis 20 : 1 einsetzt, wobei eine nichtacrylierte Vorstufe (P) von (P*) aus (A) und (C) entsteht und (D)

teilweise oligomerisiert wobei (D') entsteht:

$$A + C + D \rightarrow A + P + D + D'$$

• die in der zweiten Stufe erhaltene Reaktionsmischung in einer dritten Stufe (iii) - gegebenenfalls in Gegenwart eines Katalysators - mit Acrylsäure unter Ringöffnung aller Epoxygruppen umsetzt, wobei das acrylierte (P*) aus der nichtacrylierte Vorstufe P entsteht und wobei der acrylierte (D*) aus der nichtacrylierte Vorstufe (D) und oligomerisierte Vorstufe (D') entsteht,
• die in der dritten Stufe erhaltene Reaktionsmischung in einer vierten Stufe (iv) in Wasser dispergiert.

**Claims**

**1.** Water-based radiation curable epoxy acrylate dispersions containing (a) an epoxy acrylate resin (P*) with at least 2 acrylate groups per molecule, this epoxy acrylate resin at 25 °C not being auto-dispersing in water, and (b) a dispersant (D*) with at least 1 acrylate group per molecule, containing compounds (A) selected from the group of non-ionic compounds that have a HLB value lower than 12, and that contain at least two oxirane groups per molecule, compounds (B) selected from the group of non-ionic compounds that have a HLB value between 12 and 20 and that contain at least one H-acid group (ZH) per molecule, and compounds (C) selected from the group of non-ionic compounds that have a HLB value lower than 12 and that contain at least two H-acid groups per molecule, wherein the compounds (A) on the one hand are building blocks for (D*) and on the other hand for (P*), the compounds (B) which include a hydrophilic structural element are building blocks for (D*) and the compounds (C) are building blocks for (P*), these dispersions being obtainable by

• transforming at first in a first step (i) one or several compounds (A) with one or several compounds (B) - if necessary in the presence of a catalyst -, in which one uses the compounds (A) and (B) in an equivalent ratio EpO(A) : ZH (B) between 1,3 : 1 and 400 :1, in which a non-acrylated precursor (D) of (D*) arises:

$$A+B \rightarrow A+D$$

• transforming the reaction mix obtained in the first step, in a second step (ii) with one or several compounds (A) and with one or several compounds (C) - if necessary in the presence of a catalyst - , using the compounds (A) and (C) in an equivalent ratio EpO(A) : ZH (C) between 1,1 : 1 and 20 : 1, in which a non-acrylated precursor (P) of (P*) arises from (A) and (C) and (D) partially oligomerizes, creating (D'):

$$A + C + D \rightarrow A + P + D + D'$$

• transforming the reaction mix obtained in the second step in a third step (III) - if necessary in the presence of a catalyst - with acrylic acid with ring-opening of all epoxy groups, in which the acrylated (P*) arises from the non-acrylated precursor (P) and in which the acrylated (D*) arises from the non-acrylated precursor (D) and oligomerized precursor (D'),
• dispersing the reaction mix obtained in the third step in a fourth step (iv) in water.

**2.** Epoxy acrylate dispersions according to claim 1, in which the compounds (A) are selected from the group of glycidyl ethers that contain two or more glycidyl groups per molecule.

**3.** Epoxy acrylate dispersions according to claim 2, in which one uses bisphenol-A-diglycidyl ether as compound (A).

**4.** Epoxy acrylate dispersions according to one of the claims 1 to 3, in which the compounds (B) are selected from the group of polyethylene glycols, EO/PO-block copolymers, PO/EO/PO-block copolymers, and EO/PO/EO-block copolymers.

**5.** Epoxy acrylate dispersions according to one of the claims 1 to 4, in which the compounds (C) are selected from the group of polyols with two or more OH groups per molecule.

**6.** Epoxy acrylate dispersions according to claim 5, in which bisphenol A is used as compound (C).

**7.** Epoxy acrylate dispersions according to one of the claims 1 to 6, in which in step (i) a catalyst is used.

**8.** Epoxy acrylate dispersions according to one of the claims 1 to 7, in which in step (i) the compounds (A) and (B) are used in an equivalent ratio EpO(A) : ZH (B) between 1,5 : 1 and 50 :1.

**9.** Epoxy acrylate dispersions according to one of the claims 1 to 8, in which in step (ii) the compounds (A) and (C) are used in an equivalent ratio EpO(A) : ZH (C) between 1,8 : 1 and 2,2 : 1.

**10.** Use of the epoxy acrylate dispersions according to one of the claims 1 to 9 as radiation curable masses for coating systems.

**11.** Use according to claim 10, in which the epoxy acrylate dispersions are used for coating wood, metal, paper, or cardboard.

**12.** Method for producing water-based radiation curable epoxy acrylate dispersions containing (a) an epoxy acrylate resin (P*) with at least 2 acrylate groups per molecule, this epoxy acrylate resin at 25 °C not being auto-dispersing in water, and (b) a dispersant (D*) with at least 1 acrylate group per molecule, by

• transforming at first in a first step (i) one or several compounds (A) selected from the group of non-ionic compounds that have a HLB value lower than 12 and that contain at least two oxirane groups per molecule, with one or several compounds (B) selected from the group of non-ionic compounds that have a HLB value between 12 and 20 and that contain at least one H-acid group (ZH) per molecule - if necessary in the presence of a catalyst-, using the compounds (A) and (B) in an equivalent ratio EpO(A) : ZH (B) between 1,3 : 1 and 400 :1, in which a non-acrylated precursor (D) of (D*) arises:

$$A+B \rightarrow A+D$$

• transforming the reaction mix obtained in the first step, in a second step (ii) with one or several non-ionic compounds that have a HLB value lower than 12 and that contain at least two oxirane groups per molecule (compounds A) and with one or several compounds (C) selected from the group of non-ionic compounds that have a HLB value lower than 12 and that contain at least two H-acid groups per molecule - if necessary in the presence of a catalyst -, using the compounds (A) and (C) in an equivalent ratio EpO(A) : ZH (C) between 1,1 : 1 and 20 : 1, in which a non-acrylated precursor (P) of (P*) arises from (A) and (C), and (D) partially oligomerizes, creating (D'):

$$A+C+D \rightarrow A+P+D+D'$$

• transforming the reaction mix obtained in the second step in a third step (iii) - if necessary in the presence of a catalyst - with acrylic acid with ring-opening of all epoxy groups, in which the acrylated (P*) arises from the non-acrylated precursor P and in which the acrylated (D*) arises from the non-acrylated precursor (D) and oligomerized precursor (D'),
• dispersing the reaction mix obtained in the third step in water in a fourth step (iv).

## Revendications

**1.** Dispersions d'époxy-acrylate aqueuses réticulables par radiation comportant (a) une résine d'époxy-acrylate (P*) avec au moins 2 groupes acrylate pour chaque molécule, où cette résine d'époxy-acrylate à 25 °C n'est pas auto-dispersable dans l'eau, et (b) un dispersant (D*) avec au moins 1 groupe acrylate pour chaque molécule, comportant des composés (A) qui sont sélectionnés du groupe des composés non-ioniques qui ont une valeur HLB de moins de 12 et contiennent pour chaque molécule au moins deux groupes oxirane, des composés (B) qui sont sélectionnés du groupe des composés non-ioniques qui présentent une valeur HLB entre 12 et 20 et contiennent pour chaque molécule au moins un groupe H-acide (ZH), et des composés (C) sélectionnés du groupe des composés non-ioniques qui ont une valeur HLB de moins de 12 et contiennent pour chaque molécule au moins deux groupes H-acides, où les composés (A) sont d'une part des éléments de construction pour (D*) et d'autre part pour (P*), les composés (B) qui comprennent un élément de structure hydrophile sont des éléments de construction pour (D*) et les composés (C) sont des éléments de construction pour (P*), ces dispersions étant disponibles en

• faisant réagir tout d'abord dans une première étape (i) un ou plusieurs composés (A) avec un ou plusieurs composés (B) - le cas échéant en présence d'un catalyseur -, en insérant les composés (A) et (B) dans un

rapport des équivalents EpO(A): ZH (B) entre 1,3: 1 et 400 :1, de sorte qu'un précurseur non acrylé (D) de (D*) se forme:

$$A+B \rightarrow A+D$$

• faisant réagir le mélange de réaction obtenu dans la première étape, dans une deuxième étape (ii) avec un ou plusieurs composés (A) et un ou plusieurs composés (C) - le cas échéant en présence d'un catalyseur -, en insèrant les composés (A) et (C) dans un rapport des équivalents EpO(A): ZH (C) entre 1,1: 1 et 20: 1, de sorte qu'un précurseur non acrylé (P) de (P*) se forme de (A) et (C) avec oligomérisation partielle de D en formant (D'):

$$A + C + D \rightarrow A+ P + D + D'$$

• faisant réagir le mélange de réaction obtenu dans la deuxième étape dans une troisième étape (iii) - le cas échéant en présence d'un catalyseur - avec acide acrylique avec ouverture du cycle de tous les groupes époxyde, où le (P*) acrylé naît du précurseur non acrylé (P) et où le (D*) acrylé naît du précurseur non acrylé (D) et du précurseur oligomérisé (D'),
• dispersant le mélange de réaction obtenu dans la troisième étape dans une quatrième étape (iv) dans l'eau.

**2.** Dispersions d'époxy-acrylate selon la revendication 1, où les composés (A) sont sélectionnés du groupe des éthers glycidyliques qui contiennent deux ou plusieurs groupes glycidyle pour chaque molécule.

**3.** Dispersions d'époxy-acrylate selon la revendication 2, où on insère éther diglycidylique du bisphénol A comme composé (A).

**4.** Dispersions d'époxy-acrylate selon une des revendications 1 à 3, où les composés (B) sont sélectionnés du groupe des polyéthylèneglycols, copolymères blocs EO/PO, copolymères blocs PO/EO/PO et copolymères blocs EO/PO/EO.

**5.** Dispersions d'époxy-acrylate selon une des revendications 1 jusqu'à 4, où les composés (C) sont sélectionnés du groupe des polyols avec deux ou plusieurs groupes OH pour chaque molécule.

**6.** Dispersions d'époxy-acrylate selon la revendication 5, où on insère bis-phénol A comme composé (C).

**7.** Dispersions d'époxy-acrylate selon une des revendications 1 à 6, où dans l'étape (i) on utilise un catalyseur.

**8.** Dispersions d'époxy-acrylate selon une des revendications 1 à 7, où dans l'étape (i) on insère les composés (A) et (B) dans un rapport des équivalents EpO(A): ZH (B) entre 1,5: 1 et 50 :1.

**9.** Dispersions d'époxy-acrylate selon une des revendications 1 à 8, où on insère dans l'étape (ii) les composés (A) et (C) dans un rapport des équivalents EpO(A): ZH (C) entre 1,8: 1 et 2,2: 1.

**10.** Utilisation des dispersions d'époxy-acrylate selon une des revendications 1 à 9 comme masses réticulables par radiation pour des systèmes de revêtement.

**11.** Utilisation selon la revendication 10, où on utilise les dispersions d'époxy-acrylate pour revêtir du bois, metal, papier ou carton.

**12.** Procédé de fabrication de dispersions d'époxy-acrylate aqueuses réticulables par radiation comportant (a) une résine d'époxy-acrylate (P*) avec au moins 2 groupes acryliques pour chaque molécule, cette résine d'acrylate époxydée à 25 °C n'étant pas auto-dispersable dans l'eau, et (b) un dispersant (D*) avec au moins 1 groupe acrylique pour chaque molécule, en

• faisant réagir tout d'abord dans une première étape (i) un ou plusieurs composés (A), qui sont sélectionnés du groupe des composés non-ioniques qui ont une valeur HLB de moins de 12 et pour chaque molécule contiennent au moins deux groupes oxirane, avec un ou plusieurs composés (B) qui sont sélectionnés du groupe des composés non-ioniques qui présentent une valeur HLB entre 12 et 20 et contiennent pour chaque molécule au moins un groupe H-acide (ZH) - le cas échéant en présence d'un catalyseur -, en insérant les composés (A) et (B) dans un rapport des équivalents EpO(A): ZH (B) entre 1,3: 1 et 400 :1, de sorte qu'un

précurseur non acrylé (D) de (D*) se forme:

$$A+B \rightarrow A+D$$

• faisant réagir le mélange de réaction obtenu dans la première étape, dans une deuxième étape (ii) avec un ou plusieurs composés non-ioniques, qui ont une valeur HLB de moins de 12 et pour chaque molécule contiennent au moins deux groupes oxirane (composés A) et avec un ou plusieurs composés (C) qui sont sélectionnés du groupe des composés non-ioniques qui ont une valeur HLB de moins de 12 et pour chaque molécule contiennent au moins deux groupes H-acides - le cas échéant en présence d'un catalyseur -, en insérant les composés (A) et (C) dans un rapport des équivalents EpO(A): ZH (C) entre 1,1: 1 et 20: 1, de sorte qu'un précurseur non acrylé (P) de (P*) se forme de (A) et (C) avec oligomérisation partielle de D en formant (D'):

A+C+D-A+P+D+D'

• faisant réagir le mélange de réaction obtenu dans la deuxième étape dans une troisième étape (iii) - le cas échéant en présence d'un catalyseur - avec acide acrylique avec ouverture du cycle de tous les groupes époxyde, où le (P*) acrylé naît du précurseur P non acrylé et le (D*) acrylé naît du précurseur non acrylé (D) et du précurseur oligomérisé (D'),
• dispersant le mélange de réaction obtenu dans la troisième étape dans un quatrième étape (iv) dans l'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006056331 A
- WO 2006056331 A1


### In der Beschreibung aufgeführte Nicht-Patentliteratur


- *Polymer Bulletin,* 1996, vol. 36, 141-148